# EUROPEAN PATENT APPLICATION

(11) **EP 4 848 640 A1**
(43) Date of publication of application: **02.12.2026**
(21) Application number: 25745310.0
(22) Date of filing: 22.01.2025
(51) Int. Cl.: H04L 5/00, H04W 72/1268, H04W 74/00, H04W 74/0833, H04L 1/08, H04W 72/23, H04W 84/06, H04W 72/0446

(54) **ORTHOGONAL COVER CODE-BASED TRANSMISSION/RECEPTION METHOD AND DEVICE IN NON-TERRESTRIAL NETWORK**

(30) Priority: 23.01.2024 KR 20240010502; 05.11.2024 US 202463716698 P; 07.11.2024 KR 20240157479
(60) Divisional application: 26213579.1
(71) Applicant: LG Electronics Inc., Yeongdeungpo-gu Seoul 07336 (KR)
(72) Inventor: PARK, Hanjun, Seoul 06772 (KR); LEE, Seungmin, Seoul 06772 (KR); HWANG, Daesung, Seoul 06772 (KR)
(74) Representative: Maikowski & Ninnemann Patentanwälte Partnerschaft mbB
(86) International application number: PCT/KR2025/001202
(87) International publication number: WO 2025/159484

(57) **Abstract**

Provided are a method by which a device performs wireless communication and a device for supporting same. The device may: acquire information related to a plurality of orthogonal cover code indices; determine an orthogonal cover code index among the plurality of orthogonal cover code indices; and perform transmission to a base station on the basis of an orthogonal cover code related to the orthogonal cover code index. For example, the orthogonal cover code index may be determined on the basis of whether the transmission is for initial access.

## Description

### TECHNICAL FIELD

This disclosure relates to a wireless communication system.

### BACKGROUND ART

5G NR is a successor technology to long term evolution (LTE) and is a new clean-slate mobile communication system with characteristics such as high performance, low latency, high availability, etc. 5G NR may utilize all available spectrum resources, including low-frequency bands below 1 GHz, mid-frequency bands between 1 GHz and 10 GHz, high-frequency (millimeter wave) bands above 24 GHz, etc.

A 6G (wireless communication) system has purposes such as (i) very high data rate per device, (ii) a very large number of connected devices, (iii) global connectivity, (iv) very low latency, (v) decrease in energy consumption of battery-free internet of things (IoT) devices, (vi) ultra-reliable connectivity, (vii) connected intelligence with machine learning capacity, etc. The vision of the 6G system may include four aspects such as intelligent connectivity, deep connectivity, holographic connectivity and ubiquitous connectivity, and the 6G system may satisfy the requirements shown in Table 1 below. For example, Table 1 shows the requirements of the 6G system.

**[Table 1]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

### DISCLOSURE

### TECHNICAL SOLUTION

Based on an embodiment of the present disclosure, a method may be provided. For example, the method may comprise: obtaining information related to a plurality of orthogonal cover code indexes; determining an orthogonal cover code index among the plurality of orthogonal cover code indexes; and performing a transmission to a base station based on an orthogonal cover code related to the orthogonal cover code index. For example, the orthogonal cover code index may be determined based on whether the transmission is a transmission for initial access.

Based on an embodiment of the present disclosure, a device may be provided. For example, the device may comprise: at least one transceiver; at least one processor; and at least one memory connected to the at least one processor and storing instructions. For example, the instructions, based on being executed by the at least one processor, may cause the device to perform operations comprising: obtaining information related to a plurality of orthogonal cover code indexes; determining an orthogonal cover code index among the plurality of orthogonal cover code indexes; and performing a transmission to a base station based on an orthogonal cover code related to the orthogonal cover code index. For example, the orthogonal cover code index may be determined based on whether the transmission is a transmission for initial access.

Based on an embodiment of the present disclosure, a processing device adapted to control a device may be provided. For example, the processing device may comprise: at least one processor; and at least one memory connected to the at least one processor and storing instructions. For example, the instructions, based on being executed by the at least one processor, may cause the device to perform operations comprising: obtaining information related to a plurality of orthogonal cover code indexes; determining an orthogonal cover code index among the plurality of orthogonal cover code indexes; and performing a transmission to a base station based on an orthogonal cover code related to the orthogonal cover code index. For example, the orthogonal cover code index may be determined based on whether the transmission is a transmission for initial access.

Based on an embodiment of the present disclosure, a non-transitory computer-readable storage medium storing instructions may be provided. For example, the instructions, when executed, may cause a device to perform operations comprising: obtaining information related to a plurality of orthogonal cover code indexes; determining an orthogonal cover code index among the plurality of orthogonal cover code indexes; and performing a transmission to a base station based on an orthogonal cover code related to the orthogonal cover code index. For example, the orthogonal cover code index may be determined based on whether the transmission is a transmission for initial access.

### BRIEF DESCRIPTION OF THE DRAWINGS

FIG. 1 shows a communication procedure between devices based on an embodiment of the present disclosure.
FIG. 2 shows a radio protocol architecture, based on an embodiment of the present disclosure.
FIG. 3 shows a structure of a radio frame, based on an embodiment of the present disclosure.
FIG. 4 shows a slot structure of a frame, based on an embodiment of the present disclosure.
FIG. 5 shows an example of a BWP, based on an embodiment of the present disclosure.
FIG. 6 shows a communication structure provideable in a 6G system, based on an embodiment of the present disclosure.
FIG. 7 shows an example of a communication scenario based on a 6G system, based on an embodiment of the present disclosure.
FIGs. 8a and 8b show non-terrestrial network scenarios, based on an embodiment of the present disclosure.
FIG. 9 shows a procedure for performing downlink transmission and reception, based on an embodiment of the present disclosure.
FIG. 10 shows a procedure for performing uplink transmission and reception, based on an embodiment of the present disclosure.
FIG. 11 shows a method for a device to perform wireless communication, based on an embodiment of the present disclosure.
FIG. 12 shows a method for a base station to perform wireless communication, based on an embodiment of the present disclosure.
FIG. 13 shows a communication system 1, based on an embodiment of the present disclosure.
FIG. 14 shows wireless devices, based on an embodiment of the present disclosure.
FIG. 15 shows a signal process circuit for a transmission signal, based on an embodiment of the present disclosure.
FIG. 16 shows another example of a wireless device, based on an embodiment of the present disclosure.
FIG. 17 shows a hand-held device, based on an embodiment of the present disclosure.
FIG. 18 shows a vehicle or an autonomous vehicle, based on an embodiment of the present disclosure.

### MODE FOR INVENTION

In the present disclosure, "A or B" may mean "only A", "only B" or "both A and B". In other words, in the present disclosure, "A or B" may be interpreted as "A and/or B". For example, in the present disclosure, "A, B or C" may mean "only A", "only B", "only C", or "any combination of A, B and C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

In the present disclosure, the term "configured or defined" may be interpreted as being pre-configured or configured to a device through pre-defined signaling (e.g., SIB, MAC, RRC, downlink control information (DCI), etc.) from a base station or a network. In the present disclosure, the term "configured or defined" may be interpreted as being pre-configured or configured to a device through pre-defined signaling (e.g., MAC, RRC, sidelink control information (SCI), control information signaled between devices, etc.) from another device. In the present disclosure, the term "configured or defined" may be interpreted as being pre-configured to a device.

In the present disclosure, a user equipment (UE) may refer to a device, a portable device, a wireless device, etc. In the present disclosure, a base station (BS) may refer to a radio access network (RAN) node, a non-terrestrial network (NTN) cell/node, a transmission reception point (TRP), a network, an integrated access and backhaul (IAB) node, a device, a portable device, a wireless device, etc.

The technology proposed in the present disclosure may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA2000. The TDMA may be implemented with a radio technology, such as global system for mobile communications (GSM)/general packet radio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802-20, evolved UTRA (E-UTRA), long term evolution (LTE), 5G NR, and so on.

The technology proposed in the present disclosure may be implemented as 6G wireless technology and may be applied to various 6G systems. For example, the 6G system may have key factors such as enhanced mobile broadband (eMBB), ultra-reliable low latency communications (URLLC), massive machine type communications (mMTC), artificial intelligence (AI) integrated communication, tactile internet, high throughput, high network capacity, high energy efficiency, low backhaul and access network congestion, and enhanced data security.

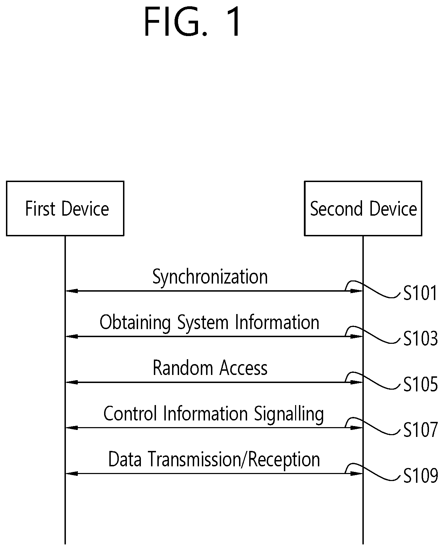

FIG. 1 shows a communication procedure between devices based on an embodiment of the present disclosure. The embodiment of FIG. 1 may be combined with various embodiments of the present disclosure.

Referring to FIG. 1, in step S101, a first device and a second device may perform synchronization. For example, the first device may be at least one of a UE and/or a device proposed in the present disclosure. For example, the second device may be at least one of a base station, a network, a RAN node, an NTN node/cell, a TRP, a UE, and/or a device proposed in the present disclosure. For example, the first device may perform an initial cell search operation. For example, the first device may detect at least one synchronization signal transmitted based on a rule pre-defined by the second device. Herein, for example, the synchronization signal may include a plurality of synchronization signals (e.g., a primary synchronization signal, a secondary synchronization signal, etc.) classified based on a structure or a purpose. By this, the first device may check a boundary of a frame, a subframe, a time unit, a slot and/or a symbol of the second device, and the first device may obtain information (e.g., a cell identifier) for the second device.

In step S103, the first device may obtain system information transmitted by the second device. For example, the system information may include information related to attributes, characteristics, and/or capabilities of the second device required to access the second device and use a service. For example, the system information may be classified based on content (e.g., whether it is essentially required for access), a transmission structure (e.g., a used channel, whether it is provided based on on-demand), etc. For example, the system information may be classified into a master information block (MIB) and a system information block (SIB). For example, as needed, the first device may transmit a signal requesting the system information prior to receiving the system information. For example, a request and provision of the system information may be performed after a random access procedure to be described later.

In step S105, the first device and the second device may perform a random access procedure. For example, the first device may transmit and/or receive at least one message (e.g., a random access preamble, a random access response message, etc.) for the random access procedure, based on information related to a random access channel of the second device (e.g., a channel position, a channel structure, a structure of a supported preamble, etc.) obtained through the system information. For example, the first device may transmit a preamble (e.g., Msg1) through a random access channel, and the first device may receive a random access response message (e.g., Msg2), and the first device may transmit a message (e.g., Msg3) including information related to the first device (e.g., identification information) to the second device by using scheduling information included in the random access response message, and the first device may receive a message (e.g., Msg4) for contention resolution and/or connection establishment. For example, Msg1 and Msg3 may be transmitted and received as one message (e.g., MsgA), and/or Msg2 and Msg4 may be transmitted and received as one message (e.g., MsgB).

In step S107, the first device and the second device may perform signaling of control information. Herein, for example, the control information may be defined in various layers such as a layer controlling a connection (e.g., a radio resource control (RRC) layer), a layer processing mapping between a logical channel and a transport channel (e.g., a media access control (MAC) layer), a layer processing a physical channel (e.g., a physical (PHY) layer), etc. For example, the first device and the second device may perform at least one of signaling for establishing a connection, signaling for determining a configuration related to communication, and/or signaling for indicating allocated resources. For example, the control information may be signaled/transmitted through a control channel. For example, the control information and/or the control channel may be used in scheduling at least one of data, a data channel (e.g., a shared channel), and/or control information on the data channel.

In step S109, the first device and the second device may transmit and/or receive data. For example, the first device and the second device may process data based on the signaling of the control information, and transmit and/or receive the data. For example, in a case of transmitting data, the first device or the second device may perform at least one of channel encoding, rate matching, scrambling, constellation mapping, layer mapping, waveform modulation, antenna mapping, and/or resource mapping for information bits. For example, in a case of receiving data, the first device or the second device may perform at least one of signal extraction from a resource, waveform demodulation for each antenna, signal arrangement considering layer mapping, constellation demapping, descrambling, and/or channel decoding.

For example, layers of a radio interface protocol between the first device and the second device may be classified into a first layer (layer 1, L1), a second layer (layer 2, L2), a third layer (layer 3, L3), etc. For example, a physical layer belonging to the first layer may provide an information transfer service using a physical channel, and a radio resource control (RRC) layer located in the third layer may perform a role of controlling radio resources between the first device and the second device. To this end, for example, the RRC layer may exchange an RRC message between the first device and the second device.

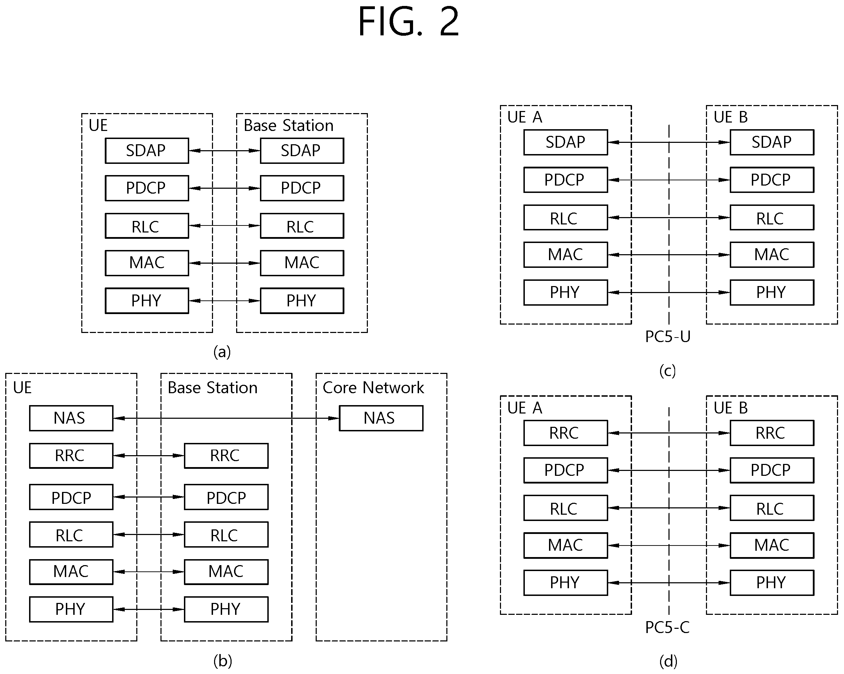

FIG. 2 shows a radio protocol architecture, based on an embodiment of the present disclosure. The embodiment of FIG. 2 may be combined with various embodiments of the present disclosure. For example, (a) of FIG. 2 may show a radio protocol stack of a user plane for uplink communication or downlink communication, and (b) of FIG. 2 may show a radio protocol stack of a control plane for uplink communication or downlink communication. For example, (c) of FIG. 2 may show a radio protocol stack of a user plane for inter-device communication, and (d) of FIG. 2 may show a radio protocol stack of a control plane for inter-device communication.

For example, the physical layer may provide an information transfer service to a higher layer using a physical channel. For example, the physical layer may be connected with a medium access control (MAC) layer, which is a higher layer, through a transport channel. For example, data may be transferred between the MAC layer and the physical layer through the transport channel. For example, the transport channel may be classified based on how and with what characteristics data is transmitted through a radio interface. For example, data may be transmitted through a physical channel between different physical layers, e.g., between physical layers of the first device and the second device. For example, the physical channel may be modulated in an orthogonal frequency division multiplexing (OFDM) scheme, and time and frequency may be utilized as radio resources.

For example, the MAC layer may provide a service to a radio link control (RLC) layer, which is a higher layer, through a logical channel. For example, the MAC layer may provide a mapping function from a plurality of logical channels to a plurality of transport channels. For example, the MAC layer may provide a logical channel multiplexing function by mapping from a plurality of logical channels to a single transport channel. For example, a MAC sub-layer may provide a data transmission service on a logical channel.

For example, the RLC layer may perform concatenation, segmentation, and reassembly of an RLC service data unit (SDU). For example, in order to guarantee various quality of service (QoS) required by a radio bearer (RB), the RLC layer may provide three operation modes of transparent mode (TM), unacknowledged mode (UM), and acknowledged mode (AM). For example, an AM RLC may provide error correction through an automatic repeat request (ARQ).

For example, the radio resource control (RRC) layer may be defined only in the control plane. For example, the RRC layer may serve to control the logical channel, the transport channel, and the physical channel in relation to configuration, reconfiguration, and release of radio bearers. For example, the RB may refer to a logical path provided by the first layer (e.g., the physical layer) and the second layer (e.g., the MAC layer, the RLC layer, a packet data convergence protocol (PDCP) layer, a service data adaptation protocol (SDAP) layer, etc.) for data delivery between the first device and the second device.

For example, a function of the PDCP layer in the user plane may include delivery of user data, header compression, and ciphering. For example, a function of the PDCP layer in the control plane may include delivery of control plane data and ciphering/integrity protection.

For example, the configuration of the RB may imply a process for specifying a radio protocol layer and channel properties to provide a particular service and for configuring each specific parameter and operation method. For example, the RB may be divided into two types: a signaling radio bearer (SRB) and a data radio bearer (DRB). For example, the SRB may be used as a path for transmitting an RRC message in the control plane, and the DRB may be used as a path for transmitting user data in the user plane.

For example, a downlink transport channel may include at least one of a broadcast channel (BCH) transmitting system information, and/or a downlink shared channel (SCH) transmitting user traffic or a control message other than that. For example, in a case of traffic or a control message of a downlink multicast or broadcast service, it may be transmitted through the downlink SCH, or it may be transmitted through a separate downlink multicast channel (MCH). Meanwhile, an uplink transport channel may include at least one of a random access channel (RACH) transmitting an initial control message, and/or an uplink shared channel (SCH) transmitting user traffic or a control message other than that. For example, the logical channel, which is located above the transport channel and mapped to the transport channel, may include at least one of a broadcast control channel (BCCH), a paging control channel (PCCH), a common control channel (CCCH), a multicast control channel (MCCH), and/or a multicast traffic channel (MTCH).

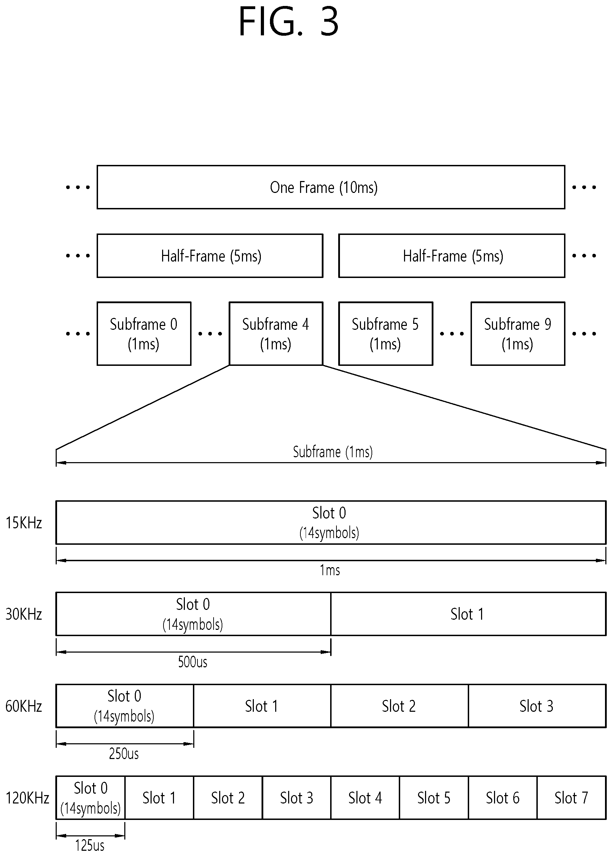

FIG. 3 shows a structure of a radio frame, based on an embodiment of the present disclosure. The embodiment of FIG. 3 may be combined with various embodiments of the present disclosure.

Referring to FIG. 3, for example, a radio frame may be used in uplink transmission, downlink transmission, and/or inter-device transmission. For example, the radio frame may have a length of 10ms, and may be defined as two 5ms half-frames (HF). For example, the half-frame may include five 1ms subframes (SF). For example, the subframe may be divided into one or more slots, and the number of slots within the subframe may be determined based on a subcarrier spacing (SCS). For example, each slot may include 12 or 14 OFDM(A) symbols based on a cyclic prefix (CP).

For example, in a case where a normal CP is used, each slot may include 14 symbols. For example, in a case where an extended CP is used, each slot may include 12 symbols. Herein, for example, the symbol may include an OFDM symbol (or, a CP-OFDM symbol), and/or a single carrier-FDMA (SC-FDMA) symbol (or, a Discrete Fourier Transform-spread-OFDM (DFT-s-OFDM) symbol).

Table 2 shown below represents an example of a number of symbols per slot (N^{slot}_{symb}), a number slots per frame (N^{frame,u}ₛₗₒₜ), and a number of slots per subframe (N^{subframe,u}ₛₗₒₜ) based on an SCS configuration (u), in a case where a normal CP or an extended CP is used.

**[Table 2]**

| CP type | SCS (15*2^{u}) | N^{slot}_{symb} | N^{frame,u}ₛₗₒₜ | N^{subframe,u}ₛₗₒₜ |
|---|---|---|---|---|
| normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| extended CP | 60kHz (u=2) | 12 | 40 | 4 |

For example, between a plurality of cells aggregated to one UE, OFDM(A) numerologies (e.g., SCS, CP length, etc.) may be configured differently. Accordingly, an (absolute time) duration of a time resource (e.g., subframe, slot, or transmit time interval (TTI)) configured with the same number of symbols may be configured differently between the aggregated cells. For example, in the present disclosure, a time resource such as a subframe, a slot, a TTI, etc. may be referred to as a time unit.

For example, a plurality of numerologies or SCSs may be supported to support various services. For example, in a case where the SCS is 15kHz, a wide area in conventional cellular bands may be supported, and in a case where the SCS is 30kHz/60kHz, a dense-urban, a lower latency, and a wider carrier bandwidth may be supported. For example, in a case where the SCS is 60kHz or higher than that, a bandwidth greater than 24.25GHz may be supported to overcome phase noise.

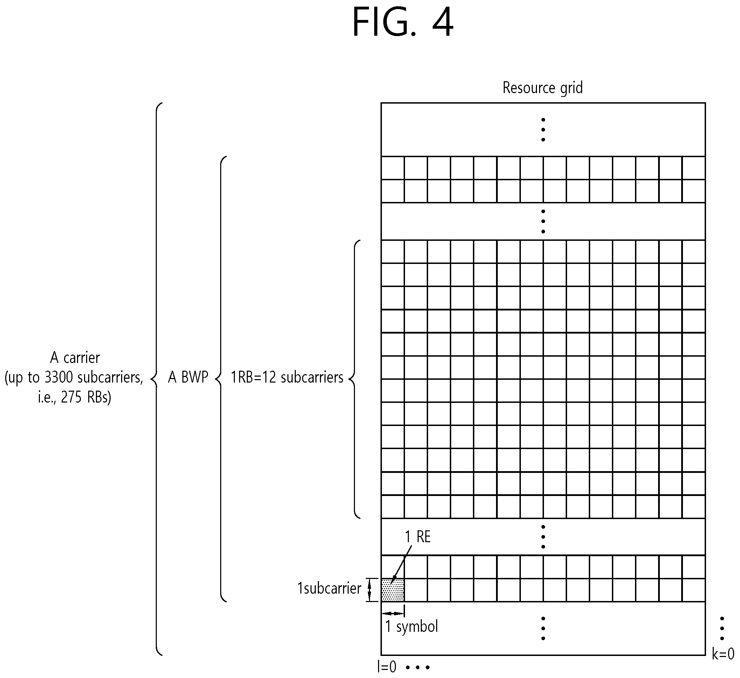

FIG. 4 shows a slot structure of a frame, based on an embodiment of the present disclosure. The embodiment of FIG. 4 may be combined with various embodiments of the present disclosure.

Referring to FIG. 4, for example, a slot may include a plurality of symbols in a time domain. For example, a carrier may include a plurality of subcarriers in a frequency domain. For example, a resource block (RB) may be defined as a plurality of consecutive subcarriers in the frequency domain. For example, a bandwidth part (BWP) may be defined as a plurality of consecutive (physical) resource blocks ((P)RB) in the frequency domain, and may correspond to one numerology (e.g., SCS, CP length, etc.). For example, a carrier may include a maximum of N BWPs (where N is a positive integer). For example, data communication may be performed through an activated BWP. For example, each element may be referred to as a resource element (RE) in a resource grid, and one complex symbol may be mapped to each element.

For example, a BWP may be a set of consecutive PRBs in a given numerology. For example, a PRB may be selected from a subset of consecutive common resource blocks (CRB) for a given numerology on a given carrier.

For example, a BWP may be at least one of an active BWP, an initial BWP, and/or a default BWP. For example, a UE may not monitor a downlink radio link quality in a DL BWP other than an active DL BWP on a primary cell (PCell). For example, the UE may not receive a physical downlink control channel (PDCCH), a physical downlink shared channel (PDSCH), or a channel state information-reference signal (CSI-RS) (excluding radio resource management (RRM)) outside the active DL BWP. For example, the UE may not trigger a channel state information (CSI) report for an inactive DL BWP. For example, the UE may not transmit a physical uplink control channel (PUCCH) or a physical uplink shared channel (PUSCH) outside an active UL BWP. For example, in a case of downlink, an initial BWP may be given as a set of consecutive resource blocks (RB) for a remaining minimum system information (RMSI) control resource set (CORESET) (configured by a physical broadcast channel (PBCH)). For example, in a case of uplink, an initial BWP may be given by a system information block (SIB) for a random access procedure. For example, a default BWP may be configured by a higher layer. For example, an initial value of the default BWP may be an initial DL BWP. For energy saving, if the UE does not detect downlink control information (DCI) for a certain period of time, the UE may switch the active BWP of the UE to the default BWP.

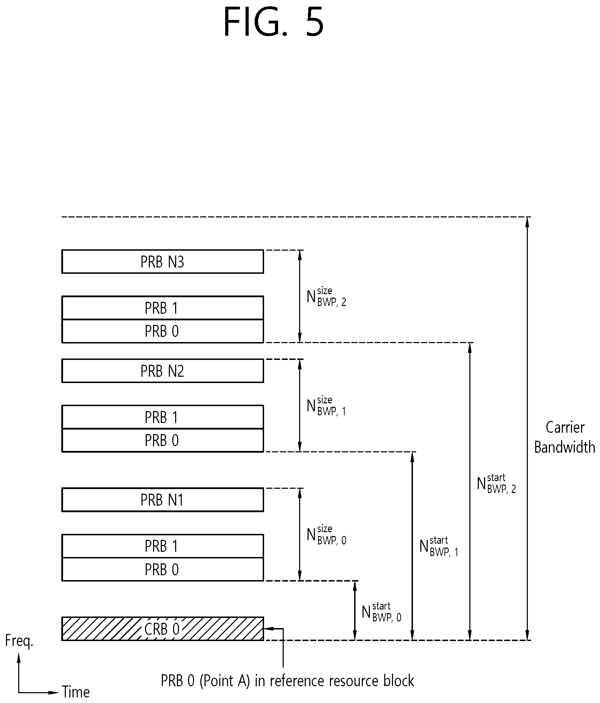

FIG. 5 shows an example of a BWP, based on an embodiment of the present disclosure. The embodiment of FIG. 5 may be combined with various embodiments of the present disclosure. In the embodiment of FIG. 5, it is assumed that there are three BWPs.

Referring to FIG. 5, for example, a common resource block (CRB) may be a carrier resource block numbered from one end of a carrier band to the other end thereof, and a PRB may be a resource block numbered within each BWP. For example, Point A may indicate a common reference point for a resource block grid.

For example, a BWP may be configured by Point A, an offset N^{start}_{BWP} from Point A, and a bandwidth N^{size}_{BWP}. For example, Point A may be an external reference point of a PRB of a carrier where subcarrier 0 of all numerologies (e.g., all numerologies supported by a network on the corresponding carrier) is aligned. For example, the offset may be a PRB interval between a lowest subcarrier and Point A in a given numerology. For example, the bandwidth may be the number of PRBs in the given numerology.

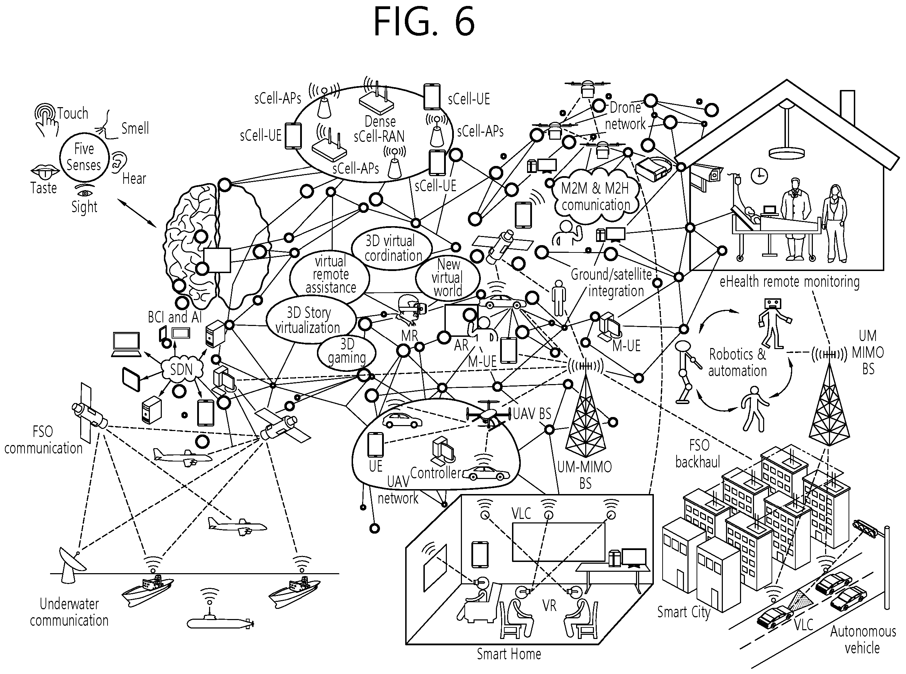

FIG. 6 shows a communication structure provideable in a 6G system, based on an embodiment of the present disclosure. The embodiment of FIG. 6 may be combined with various embodiments of the present disclosure.

As core implementation technologies of the 6G system, technologies such as artificial intelligence (AI), Terahertz (THz) communication, optical wireless technology, free space optical (FSO) backhaul network, massive multiple input multiple output (MIMO) technology, blockchain, 3D networking, quantum communication, unmanned aerial vehicle, cell-free communication, wireless information and energy transfer (WIET), integrated sensing and communication, integrated access and backhaul network, holographic beamforming, big data analytics, large intelligent surface (LIS), etc. may be adopted.
- Artificial Intelligence (AI): When AI is introduced to communication, real-time data transmission may be simplified and improved. AI may determine a method of performing complicated target tasks using countless analysis. For example, AI may increase efficiency and reduce processing delay. Operation consuming time such as handover, network selection, and resource scheduling may be immediately performed by using AI. AI may also play an important role in M2M, machine-to-human, and human-to-machine. In addition, AI may be a prompt communication in brain computer interface (BCI). An AI based communication system may be supported by metamaterial, intelligence structure, intelligence network, intelligence device, intelligence cognitive radio, self-maintaining wireless network, and machine learning.
- Terahertz (THz) communication: A data rate may increase by increasing bandwidth. This may be performed by using sub-THz communication with wide bandwidth and applying advanced massive MIMO technology. THz waves which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity with RF. The main characteristics of THz communication include (i) bandwidth widely available to support a very high data rate and (ii) high path loss occurring at a high frequency (a high directional antenna is indispensable). A narrow beam width generated in the high directional antenna reduces interference. The small wavelength of a THz signal allows a larger number of antenna elements to be integrated with a device and BS operating in this band. Therefore, an advanced adaptive arrangement technology capable of overcoming a range limitation may be used.
- Massive MIMO technology (large-scale MIMO)
- Hologram beamforming (HBF)
- Optical wireless technology
- Free space optical (FSO) backhaul network
- Quantum communication
- Cell-free communication
- Integration of wireless information and power transmission
- Integration of wireless communication and sensing
- Integrated access and backhaul network
- Big data analysis
- Reconfigurable intelligent surface
- Metaverse
- Block-chain
- Advanced air mobility (AAM): AAM may be a broad concept encompassing urban air mobility (UAM), regional air mobility (RAM), and an uncrewed aerial system (UAS). For example, AAM may include UAM, RAM, UAS, an uncrewed aerial vehicle (UAV), etc.
- Autonomous driving (self-driving): Vehicle to everything (V2X) that is a core element for establishing an autonomous driving infrastructure may be a technology that vehicle communicates and shares with various elements in road for autonomous driving such as vehicle to vehicle (V2V), vehicle to infrastructure (V2I), and so on.
- Non-terrestrial network (NTN): NTN may represent a network or a network segment using radio frequency (RF) resources mounted on a satellite (or a UAS platform). Use of an NTN service may be considered to secure wider coverage or to provide a wireless communication service to a place where installation of a wireless communication base station is not easy.
- Integrated sensing and communication (ISAC): Wireless sensing is a technology enabler to acquire information about characteristics of the environment and/or objects within the environment, that uses radio frequency to determine the distance (range), angle, or instantaneous linear velocity of objects, etc.
- Reconfigurable intelligent surface (RIS): RIS may be used to manipulate and enhance signal propagation in a wireless communication environment. For example, RIS may be composed of meta-surfaces or many small antennas arranged on a surface, and each small antenna may actively adjust a phase, an amplitude, a polarization, etc. of a reflected signal. For example, RIS can improve signal reception by adjusting a path, a phase, and/or an intensity of a propagated signal. For example, in a case of RIS, because power is consumed only for phase and amplitude adjustment of small antennas, power consumption may be very low. For example, because RIS may be reconfigured in accordance with various environments, it can satisfy various communication requirements and can effectively operate in a dynamic network environment.

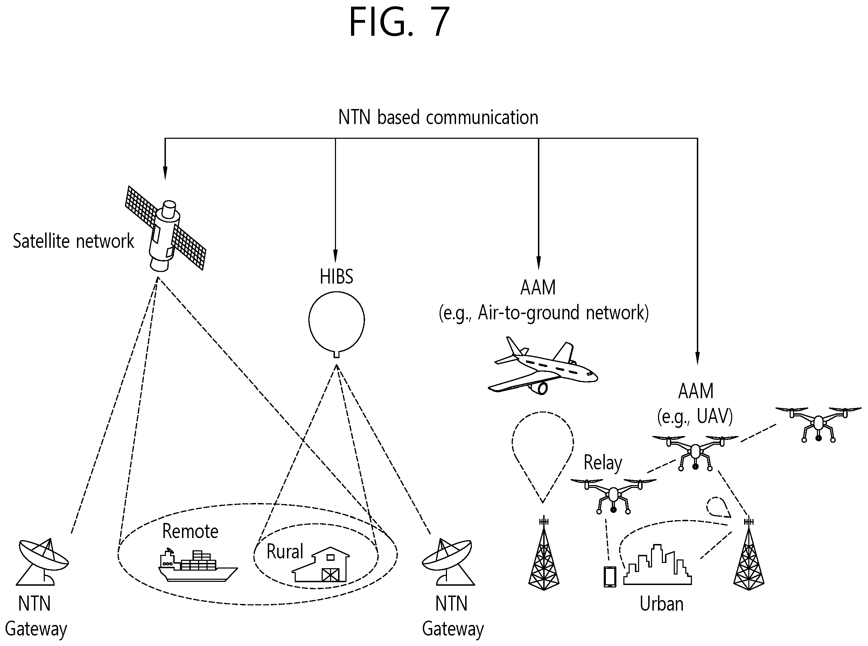

FIG. 7 shows an example of a communication scenario based on a 6G system, based on an embodiment of the present disclosure. The embodiment of FIG. 7 may be combined with various embodiments of the present disclosure.

Referring to FIG. 7, NTN communication may be performed based on a satellite network, high-altitude platform stations (HAPS) as international mobile telecommunications (IMT) base stations (BS) (HIBS), a UE (e.g., AAM) capable of aerial communication, etc. For example, for coverage enhancement, etc., a device such as the satellite network, the HIBS, the UE (e.g., AAM) capable of aerial communication, etc. may perform a role of a relay. For example, the AAM may perform communication with a base station, a satellite network, etc., and/or the AAM may perform direct communication with a UE, another AAM, etc.

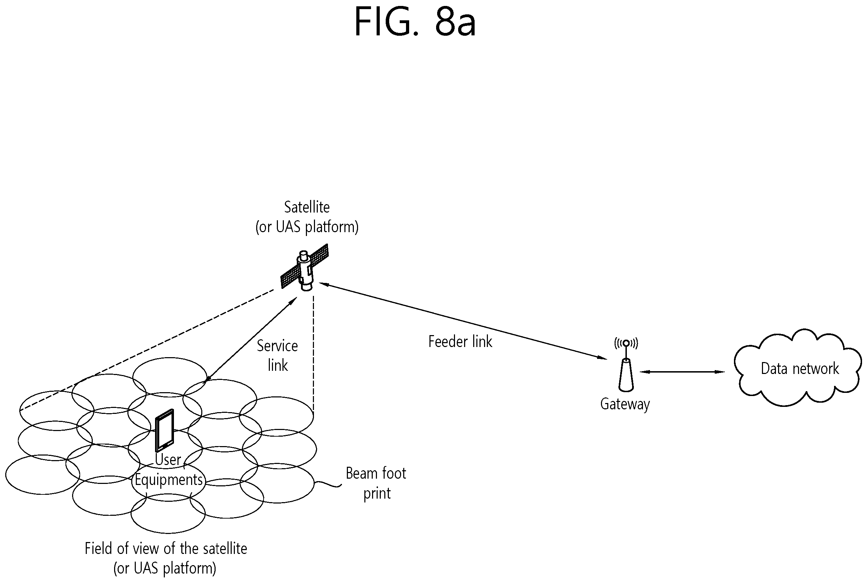

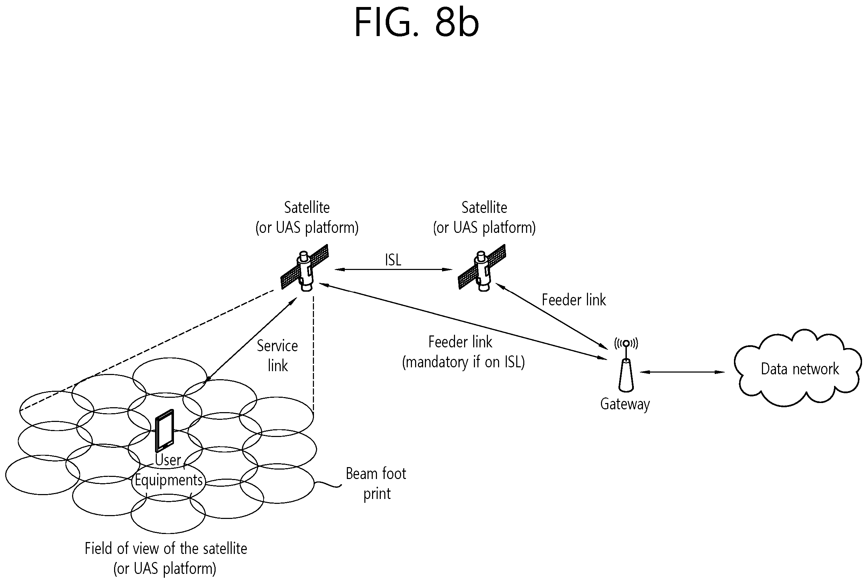

FIGs. 8a and 8b show non-terrestrial network scenarios, based on an embodiment of the present disclosure. The embodiments of FIGs. 8a and 8b may be combined with various embodiments of the present disclosure.

FIG. 8a shows a non-terrestrial network scenario based on a transparent payload, and FIG. 8b shows a non-terrestrial network scenario based on a regenerative payload. For example, a non-terrestrial network may generally include the following element(s).
- One or more satellite gateways connecting the non-terrestrial network to a public data network
- A feeder link or a wireless link between a satellite gateway and a satellite (or UAS platform)
- A service link or a wireless link between a user equipment (UE) and a satellite (or UAS platform)
- A satellite (or UAS platform) that can implement a transparent or regenerative payload (including onboard processing). For example, the satellite (or UAS platform) may generally generate multiple beams across a given service area bounded by line of sight. For example, a beam footprint may generally be elliptical. For example, the line of sight of the satellite (or UAS platform) may vary based on an onboard antenna diagram and a minimum elevation angle. For example, for the transparent payload, radio frequency filtering, frequency conversion, and amplification may be performed. Therefore, a repeated waveform signal in the payload may not be changed. For example, for the regenerative payload, radio frequency filtering, frequency conversion and amplification, and demodulation/decoding, switching and/or routing, and coding/modulation may be performed. This may effectively be the same as mounting all base station functions on the satellite (or UAS platform).
- Optionally, an inter-satellite link (ISL);
- A user equipment may be served by a satellite (or UAS platform) within a target service area.

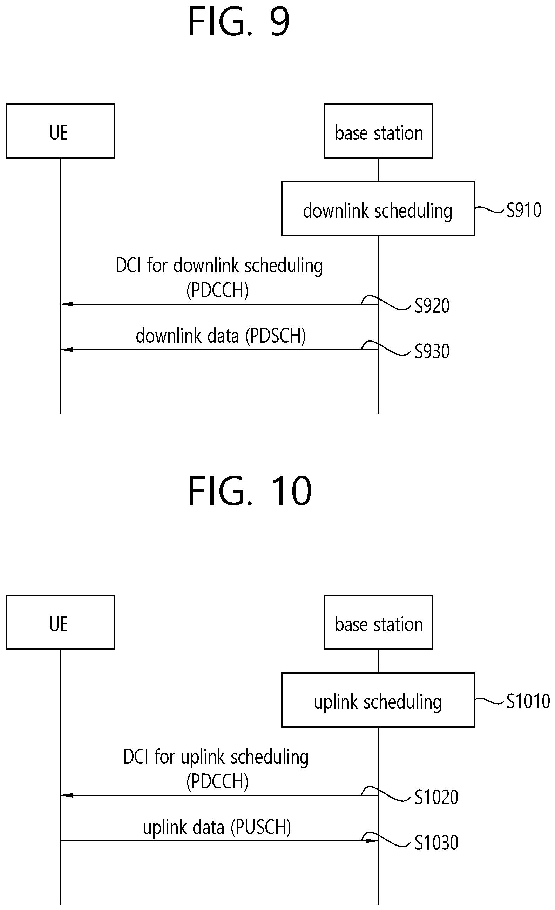

FIG. 9 shows a procedure for performing downlink transmission and reception, based on an embodiment of the present disclosure. The embodiment of FIG. 9 may be combined with various embodiments of the present disclosure.

Referring to FIG. 9, in step S910, a base station may schedule a downlink transmission such as a frequency/time resource, a transmission layer, a downlink precoder, a modulation and coding scheme (MCS), etc. For example, the base station may determine a beam for a PDSCH transmission to a UE.

In step S920, the UE may receive, from the base station, a DCI for downlink scheduling (e.g., including scheduling information of the PDSCH) on a PDCCH.

For example, a DCI format 1_0 or 1_1 may be used for downlink scheduling. For example, the DCI format 1_1 may include information as follows: identifier for DCI formats, bandwidth part indicator, frequency domain resource assignment, time domain resource assignment, bundling size indicator, rate matching indicator, zero power (ZP) CSI-RS trigger, antenna port(s), transmission configuration indication (TCI), sounding reference signal (SRS) request, demodulation reference signal (DMRS) sequence initialization.

For example, according to each state indicated in an antenna port(s) field, the number of DMRS ports may be scheduled, and also single-user (SU)/multi-user (MU) transmission scheduling may be possible.

For example, a TCI field may be configured with 3 bits, and quasi co-location (QCL) for DMRS may be dynamically indicated by indicating up to 8 TCI states according to a TCI field value.

In step S930, the UE may receive downlink data from the base station on the PDSCH.

For example, if the UE detects the PDCCH including the DCI format 1_0 or 1_1, the UE may decode the PDSCH based on an indication by the corresponding DCI.

FIG. 10 shows a procedure for performing uplink transmission and reception, based on an embodiment of the present disclosure. The embodiment of FIG. 10 may be combined with various embodiments of the present disclosure.

Referring to FIG. 10, in step S1010, a base station may schedule an uplink transmission such as a frequency/time resource, a transmission layer, an uplink precoder, a modulation and coding scheme (MCS), etc. For example, the base station may determine a beam for a PUSCH transmission of a UE.

In step S1020, the UE may receive, from the base station, a DCI for uplink scheduling (e.g., including scheduling information of the PUSCH) on a PDCCH.

For example, a DCI format 0_0 or 0_1 may be used for uplink scheduling. For example, the DCI format 0_1 may include information as follows: identifier for DCI formats, UL/supplementary uplink (SUL) indicator, bandwidth part indicator, frequency domain resource assignment, time domain resource assignment, frequency hopping flag, modulation and coding scheme (MCS), SRS resource indicator (SRI), precoding information and number of layers, antenna port(s), SRS request, DMRS sequence initialization, uplink shared channel (UL-SCH) indicator.

For example, SRS resources configured within an SRS resource set associated with a higher layer parameter 'usage' may be indicated by an SRS resource indicator field. For example, 'spatialRelationInfo' may be configured for each SRS resource, and a value thereof may be one of {CRI, SSB, SRI}.

In step S1030, the UE may transmit uplink data to the base station on the PUSCH.

For example, if the UE detects the PDCCH including the DCI format 0_0 or 0_1, the UE may transmit the corresponding PUSCH according to an indication by the corresponding DCI. For example, two transmission schemes of a codebook-based transmission and a non-codebook-based transmission may be supported for the PUSCH transmission.

For example, if a higher layer parameter 'txConfig' is set to 'codebook', the UE may be configured with the codebook-based transmission. On the other hand, for example, if the higher layer parameter 'txConfig' is set to 'nonCodebook', the UE may be configured with the non-codebook-based transmission. For example, if the higher layer parameter 'txConfig' is not configured, the UE may not expect to be scheduled by the DCI format 0_1. For example, if the PUSCH is scheduled by the DCI format 0_0, the PUSCH transmission may be based on a single antenna port.

Recently, in the communication field, introduction of a non-terrestrial network (NTN) utilizing a satellite or the like as a network node is actively discussed. Satellites supporting the NTN may be classified according to a flight orbit and characteristics of the satellite, such as geostationary earth orbit (GEO), medium earth orbit (MEO), low earth orbit (LEO), and the like, and generally have a characteristic that an altitude of the satellite is very high. Accordingly, a service area of the satellite may have a very wide coverage characteristic, and the number of target UEs within the corresponding service area may be relatively large. Accordingly, the NTN service may be required to support multiplexing for a plurality of UE(s). Herein, since a terrestrial UE has a limitation in transmission power, a coverage extension technology may be applied in order to make a signal of a sufficient size reach a high-altitude NTN during uplink transmission. For example, the UE can achieve coverage extension by repeating a physical uplink shared channel (PUSCH), which is an uplink data channel, on a time axis. Herein, the UE may transmit the PUSCH in a Discrete Fourier Transform Spread Orthogonal Frequency Division Multiplexing (DFT-s-OFDM) scheme for a coverage gain. Herein, the DFT-s-OFDM modulation scheme may refer to a modulation scheme in which DFT precoding (or DFT spreading) is applied as a part of transform (TF) precoding before an OFDM modulation scheme. Meanwhile, the coverage extension technology may decrease efficiency of resource utilization according to repeated transmission, and an uplink multiplexing method utilizing an orthogonal cover code (OCC) may be effective. Hereinafter, in the present disclosure, when the UE may apply an OCC to an uplink transmission signal, a method for configuring and/or indicating the OCC and a device supporting the same are proposed.

Hereinafter, the present disclosure mainly describes method(s) when applying an OCC to an uplink data channel, but proposed method(s) of the present disclosure may be extended and applied even when applying an OCC to an arbitrary uplink transmission signal.

[Proposed Method #01] When a UE may apply an OCC to an uplink data channel (and/or Msg3 PUSCH) (and/or repeated transmission thereof) scheduled based on a UL grant in a random access response (RAR), the UE may report a support capability related to the OCC application by selecting and transmitting a (pre-)configured and/or (pre-)defined (specific) initial access resource (e.g., a RACH preamble, etc.) between a base station and the UE. Herein, for example, whether to apply the OCC may be configured/indicated by the base station. Herein, for example, the OCC may be applied over repeated transmissions. Herein, for example, the random access response (RAR) may refer to a response signal of the base station to an initial access resource (e.g., a random access channel (RACH) preamble, etc.) transmitted by the UE. Herein, for example, the random access channel (RACH) may refer to a physical transmission channel/resource, etc. for supporting initial access and/or random access.

For example, in a non-terrestrial network-based next-generation mobile communication system based on an embodiment of the present disclosure, assume that a UE transmits an uplink data channel (e.g., a PUSCH). For example, the non-terrestrial network may include a UE, a satellite, and a base station, a service link may connect between the UE and the satellite, and a feeder link may connect between the satellite and the base station. Herein, for example, the UE may support transmission of an uplink data channel (e.g., a PUSCH) to which an OCC is applied for the purpose of increasing uplink capacity and the like.

Herein, for example, in the case of an initial access procedure, the UE may first transmit a random access channel (RACH) preamble as Msg1, the base station may transmit a random access response (RAR) as Msg2, and the UE may, in turn, transmit an RRC connection request or the like as Msg3. Herein, for example, the Msg3 may be transmitted in the form of an uplink data channel (e.g., a PUSCH), and repeated transmission for coverage enhancement may be supported. Herein, for example, if the Msg3 PUSCH is repeatedly transmitted, application of an OCC may be considered to increase uplink capacity. Herein, for example, the UE should be able to report (UE) capability information indicating that it can support OCC application when transmitting the Msg3 PUSCH. Herein, for example, since the initial access procedure may be a stage prior to a procedure of reporting the capability of the UE, the support capability related to the OCC application for the Msg3 PUSCH may be reported by the UE selecting and transmitting a (pre-)configured and/or (pre-)defined (specific) initial access resource (e.g., a RACH preamble, etc.) between the base station and the UE. Herein, for example, generalizing, a capability related to OCC support may be reported by selecting and transmitting a (pre-)configured and/or (pre-)defined (specific) initial access resource (e.g., a RACH preamble, etc.) for an uplink data channel (and/or Msg3 PUSCH) (and/or repeated transmission thereof) scheduled based on a UL grant in a random access response (RAR). Based on the proposed method of the present disclosure, there is an advantage that OCC application can be supported even for an uplink data channel (e.g., a PUSCH) (and/or repeated transmission thereof) prior to the initial access procedure and/or the UE capability reporting procedure.

The [Proposed Method #01] may be applied in combination with other proposed method(s) within a range where the proposed operations do not conflict.

[Proposed Method #02] When a UE may apply an OCC to an uplink data channel (and/or Msg3 PUSCH) (and/or repeated transmission thereof) scheduled based on a UL grant in a random access response (RAR), a base station and/or the UE may determine an OCC application (basic) unit and/or an OCC length in one or more of the following methods.
(1) The OCC application (basic) unit may be determined based on a repeated transmission unit of the uplink data channel. For example, if repeated transmission of PUSCH repetition type A is applied during Msg3 PUSCH transmission, the OCC application (basic) unit may be a slot.
(2) The OCC length may be determined based on the number of repeated transmissions of the uplink data channel. For example, if repeated transmission of PUSCH repetition type A is applied during Msg3 PUSCH transmission, the OCC length may be the number of repeated PUSCH transmissions.

Herein, for example, whether to apply the OCC may be configured/indicated by the base station. Herein, for example, the random access response (RAR) may refer to a response signal of the base station to an initial access resource (e.g., a random access channel (RACH) preamble, etc.) transmitted by the UE. Herein, for example, the random access channel (RACH) may refer to a physical transmission channel/resource, etc. for supporting initial access and/or random access.

For example, in a non-terrestrial network-based next-generation mobile communication system based on an embodiment of the present disclosure, assume that a UE transmits an uplink data channel (e.g., a PUSCH). For example, the non-terrestrial network may include a UE, a satellite, and a base station, a service link may connect between the UE and the satellite, and a feeder link may connect between the satellite and the base station. Herein, for example, the UE may support transmission of an uplink data channel (e.g., a PUSCH) to which an OCC is applied for the purpose of increasing uplink capacity and the like.

Herein, for example, in the case of an initial access procedure, the UE may first transmit a random access channel (RACH) preamble as Msg1, the base station may transmit a random access response (RAR) as Msg2, and the UE may, in turn, transmit an RRC connection request or the like as Msg3. Herein, for example, the Msg3 may be transmitted in the form of an uplink data channel (e.g., a PUSCH), and repeated transmission for coverage enhancement may be supported. Herein, for example, if the Msg3 PUSCH is repeatedly transmitted, application of an OCC may be considered to increase uplink capacity. Herein, for example, when applying an OCC to an uplink data channel (and/or Msg3 PUSCH) (and/or repeated transmission thereof) scheduled based on a UL grant in the random access response (RAR), since it is difficult to deliver UE-specific/dedicated configuration information, it may be preferable to implicitly configure/indicate the OCC application (basic) unit and/or the OCC length rather than explicitly configuring/indicating them. Herein, for example, the OCC application (basic) unit may be determined based on a repeated transmission unit of the uplink data channel. For example, if repeated transmission of PUSCH repetition type A is applied during Msg3 PUSCH transmission, the OCC application (basic) unit may be a slot. Herein, for example, the OCC length may be determined based on the number of repeated transmissions of the uplink data channel. For example, if repeated transmission of PUSCH repetition type A is applied during Msg3 PUSCH transmission, the OCC length may be the number of repeated PUSCH transmissions. Based on the proposed method of the present disclosure, there is an advantage that OCC application can be supported (without an additional signaling load) even for an uplink data channel (e.g., a PUSCH) (and/or repeated transmission thereof) prior to the initial access procedure and/or a UE-specific/dedicated configuration.

The [Proposed Method #02] may be applied in combination with other proposed method(s) within a range where the proposed operations do not conflict.

[Proposed Method #03] When a UE may apply an OCC to an uplink data channel (and/or Msg3 PUSCH) (and/or repeated transmission thereof) scheduled based on a UL grant in a random access response (RAR), a base station and/or the UE may determine an OCC index based on one or more of the following items:
(1) RAPID (RACH preamble ID)
(2) PRACH OCC index
(3) A location of a UL grant (of the corresponding UE) within the RAR

Herein, for example, whether to apply the OCC may be configured/indicated by the base station. Herein, for example, the OCC may be applied over repeated transmissions. Herein, for example, the random access response (RAR) may refer to a response signal of the base station to an initial access resource (e.g., a random access channel (RACH) preamble, etc.) transmitted by the UE. Herein, for example, the random access channel (RACH) may refer to a physical transmission channel/resource, etc. for supporting initial access and/or random access. Herein, for example, the UE may refer to the UL grant(s) in the RAR, and if another uplink data channel whose resource allocation partially and/or fully overlaps (on a time axis and/or a frequency axis) with its own uplink data channel exists, the UE may apply an OCC, and otherwise, the UE may not apply an OCC.

For example, in a non-terrestrial network-based next-generation mobile communication system based on an embodiment of the present disclosure, assume that a UE transmits an uplink data channel (e.g., a PUSCH). For example, the non-terrestrial network may include a UE, a satellite, and a base station, a service link may connect between the UE and the satellite, and a feeder link may connect between the satellite and the base station. Herein, for example, the UE may support transmission of an uplink data channel (e.g., a PUSCH) to which an OCC is applied for the purpose of increasing uplink capacity and the like.

Herein, for example, in the case of an initial access procedure, the UE may first transmit a random access channel (RACH) preamble as Msg1, the base station may transmit a random access response (RAR) as Msg2, and the UE may, in turn, transmit an RRC connection request or the like as Msg3. Herein, for example, the Msg3 may be transmitted in the form of an uplink data channel (e.g., a PUSCH), and repeated transmission for coverage enhancement may be supported. Herein, for example, if the Msg3 PUSCH is repeatedly transmitted, application of an OCC may be considered to increase uplink capacity. Herein, for example, when applying an OCC to an uplink data channel (and/or Msg3 PUSCH) (and/or repeated transmission thereof) scheduled based on a UL grant in the random access response (RAR), since it is difficult to deliver UE-specific/dedicated configuration information, it may be preferable to implicitly configure/indicate the OCC index rather than explicitly configuring/indicating it. Therefore, in the present disclosure, when a UE may apply an OCC to an uplink data channel (and/or Msg3 PUSCH) (and/or repeated transmission thereof) scheduled based on a UL grant in the random access response (RAR), a base station and/or the UE may determine an OCC index based on one or more of the following items:
(1) RAPID (RACH preamble ID)
(2) PRACH OCC index
(3) A location of a UL grant (of the corresponding UE) within the RAR

Based on the proposed method of the present disclosure, there is an advantage that OCC application can be supported (without an additional signaling load) even for an uplink data channel (e.g., a PUSCH) (and/or repeated transmission thereof) prior to the initial access procedure and/or a UE-specific/dedicated configuration.

The [Proposed Method #03] may be applied in combination with other proposed method(s) within a range where the proposed operations do not conflict.

[Proposed Method #04] When a UE may apply an OCC to an uplink data channel (e.g., a PUSCH) (and/or repeated transmission thereof), the UE may determine the OCC configuration to be invalid for one or more of the following cases:
(1) If the (configured/indicated) number of repeated PUSCH transmissions is small compared to the (configured/indicated) OCC length
(2) If a (configured/indicated) (nominal) time domain window (TDW) is small compared to the (configured/indicated) OCC length
(3) If a (configured/indicated) hopping interval is small compared to the (configured/indicated) OCC length
(4) If a resource group to which an OCC is applied has an interval of a certain level or more (on a time/frequency axis)
(5) If slot indexing is applied based on an available slot
(6) If PUSCH repetition type B is applied

Herein, for example, whether to apply the OCC may be configured/indicated by the base station. Herein, for example, the OCC may be applied over repeated transmissions. Herein, for example, the OCC may be applied over repeated transmissions (on a time axis and/or a frequency axis) of an uplink data channel (e.g., a PUSCH). Herein, for example, the (nominal) time domain window (TDW) may refer to a (nominal) time interval in which the UE is expected to maintain phase continuity and/or power consistency, and the base station may (pre-)configure/define/indicate it to the UE. Herein, for example, the hopping interval may refer to a (time/frequency) interval in which a single hop is maintained when frequency hopping and/or OCC index hopping of an uplink data channel (e.g., a PUSCH) is applied. Herein, for example, the available slot may refer to a slot in which the UE can completely transmit an allocated PUSCH resource. For example, if some (OFDM) symbol(s) among scheduled PUSCH resources within a slot are invalid symbol(s) (e.g., a downlink transmission symbol and/or a synchronization signal transmission symbol, etc.), the corresponding slot may not be an available slot. Herein, for example, PUSCH repetition type B is a type of repeated PUSCH transmission, and may refer to a type in which the UE performs a next repeated transmission immediately following a symbol where a previous repeated transmission ends. Herein, for example, the (configured/defined/indicated) number of repeated PUSCH transmissions may refer to the number of repeated PUSCH transmissions within a (nominal) TDW and/or within a hop.

For example, in a non-terrestrial network-based next-generation mobile communication system based on an embodiment of the present disclosure, assume that a UE transmits an uplink data channel (e.g., a PUSCH). For example, the non-terrestrial network may include a UE, a satellite, and a base station, a service link may connect between the UE and the satellite, and a feeder link may connect between the satellite and the base station. Herein, for example, the UE may support transmission of an uplink data channel (e.g., a PUSCH) to which an OCC is applied for the purpose of increasing uplink capacity and the like.

Herein, for example, if the base station configures/indicates application of an OCC for an uplink data channel (e.g., a PUSCH) (and/or repeated transmission thereof) to the UE, the UE may go through a procedure of determining the validity of the OCC application configuration/indication. Herein, for example, if it is determined that the orthogonality of the OCC is not maintained or it is difficult to guarantee the orthogonality of the OCC, the UE may determine the corresponding OCC configuration to be invalid. For example, the UE may determine the corresponding OCC configuration to be invalid for one or more of the following cases:
(1) If the (configured/indicated) number of repeated PUSCH transmissions is small compared to the (configured/indicated) OCC length
(2) If a (configured/indicated) (nominal) TDW is small compared to the (configured/indicated) OCC length
(3) If a (configured/indicated) hopping interval is small compared to the (configured/indicated) OCC length
(4) If a resource group to which an OCC is applied has an interval of a certain level or more (on a time/frequency axis)
(5) If slot indexing is applied based on an available slot
(6) If PUSCH repetition type B is applied

Based on the proposed method of the present disclosure, by promising and/or defining that the UE determines the corresponding OCC application configuration to be invalid for configuration combinations in which the orthogonality and/or the validity of the OCC is difficult to expect, there is an advantage that the implementation of the UE can be facilitated and operations between the base station and the UE can be clarified.

The [Proposed Method #04] may be applied in combination with other proposed method(s) within a range where the proposed operations do not conflict.

[Proposed Method #05] When a UE may apply an OCC to an uplink data channel (e.g., a PUSCH) (and/or repeated transmission thereof), if the UE may apply the OCC over repeated transmissions of the uplink data channel (e.g., a PUSCH), OCC application within the repeated transmission interval may be supported in one or more of the following methods:
(1) The OCC may be (repeatedly) applied from the start timing of the repeated transmission.
(2) The base station may configure and/or indicate interval information (or a start position and/or an end position and/or a length) related to OCC application (within the repeated transmission interval).

Herein, for example, whether to apply the OCC may be configured/indicated by the base station. Herein, for example, the OCC may be applied over repeated transmissions. Herein, for example, the OCC may be applied over repeated transmissions (on a time axis and/or a frequency axis) of an uplink data channel (e.g., a PUSCH). Herein, for example, the repeated transmission interval (on a time/frequency axis) of the uplink data channel may be configured/indicated to be equal to or longer than an OCC application interval (or OCC length) (on a time/frequency axis).

For example, in a non-terrestrial network-based next-generation mobile communication system based on an embodiment of the present disclosure, assume that a UE transmits an uplink data channel (e.g., a PUSCH). For example, the non-terrestrial network may include a UE, a satellite, and a base station, a service link may connect between the UE and the satellite, and a feeder link may connect between the satellite and the base station. Herein, for example, the UE may support transmission of an uplink data channel (e.g., a PUSCH) to which an OCC is applied for the purpose of increasing uplink capacity and the like.

Herein, for example, the UE may apply an OCC over repeated transmissions of an uplink data channel (e.g., a PUSCH). Herein, for example, the OCC length (applied by the UE) may be equal to or smaller than the repeated transmission interval/number of the uplink data channel (e.g., a PUSCH). Herein, for example, when the OCC length is shorter than the repeated transmission interval, an agreement between the base station and the UE regarding an OCC application method may be necessary. For example, the base station and the UE may (pre-)promise/define that the OCC is (repeatedly) applied from the start timing of the repeated transmission. For example, when OCC = [+1 -1] and the number of repeated transmissions is 4, the OCC may be applied from the transmission starting point to apply [+1 -1] to the first two repeated transmission(s), or the OCC may be repeatedly applied from the transmission starting point to apply [+1 -1 +1 -1] to all repeated transmission(s). Alternatively, for example, the base station may configure and/or indicate interval information (or a start position and/or an end position and/or a length) related to OCC application (within the repeated transmission interval) to the UE. Based on the proposed method of the present disclosure, when the UE may apply an OCC over repeated transmissions of an uplink data channel (e.g., a PUSCH), even if the OCC length (or OCC application interval) does not match the number of repeated transmissions (or repeated transmission interval), there is an advantage that the base station and the UE can clarify operations with the same understanding of the OCC application interval.

The [Proposed Method #05] may be applied in combination with other proposed method(s) within a range where the proposed operations do not conflict.

[Proposed Method #06] When a UE may apply an OCC to an uplink data channel (e.g., a PUSCH) (and/or repeated transmission thereof), the UE may apply the OCC based on one or more of the following slot indexing methods:
(1) In the case of physical slot indexing, the OCC may be applied to consecutive slot(s) based on a physical slot index.
(2) In the case of available slot indexing, the OCC may be applied to consecutive slot(s) based on an available slot index.

Herein, for example, whether to apply the OCC may be configured/indicated by the base station. Herein, for example, the OCC may be applied over repeated transmissions. Herein, for example, the OCC application interval may follow the configuration of an OCC application unit and/or an OCC length. Herein, for example, the OCC may be applied in units of a multiple of slots on a time axis. Herein, for example, the physical slot may refer to a physically defined scheduling unit (on a time axis). Herein, for example, the available slot may refer to a slot in which the UE can completely transmit an allocated PUSCH resource. For example, if some (OFDM) symbol(s) among scheduled PUSCH resources within a slot are invalid symbol(s) (e.g., a downlink transmission symbol and/or a synchronization signal transmission symbol, etc.), the corresponding slot may not be an available slot. Herein, for example, the slot indexing method to be referenced when applying the OCC may be information (pre-)defined and/or (pre-)configured between the base station and the UE.

For example, in a non-terrestrial network-based next-generation mobile communication system based on an embodiment of the present disclosure, assume that a UE transmits an uplink data channel (e.g., a PUSCH). For example, the non-terrestrial network may include a UE, a satellite, and a base station, a service link may connect between the UE and the satellite, and a feeder link may connect between the satellite and the base station. Herein, for example, the UE may support transmission of an uplink data channel (e.g., a PUSCH) to which an OCC is applied for the purpose of increasing uplink capacity and the like.

Herein, for example, the OCC applied by the UE to the uplink data channel (e.g., a PUSCH) (and/or repeated transmission thereof) may be an OCC applied on a time axis. Herein, for example, when applying the (time axis) OCC, the UE may apply the OCC in units of a multiple of slots on a time axis. Herein, for example, a resource group to which the (time axis) OCC is applied may vary depending on the slot indexing method. For example, based on physical slot indexing, a resource group to which an OCC is applied may be formed with consecutive slot(s) based on a physical slot index. For example, based on available slot indexing, a resource group to which an OCC is applied may be formed with consecutive slot(s) based on an available slot index. Herein, for example, the available slot may refer to a slot in which the UE can completely transmit an allocated PUSCH resource. For example, if some (OFDM) symbol(s) among scheduled PUSCH resources within a slot are invalid symbol(s) (e.g., a downlink transmission symbol and/or a synchronization signal transmission symbol, etc.), the corresponding slot may not be an available slot. Herein, for example, the slot indexing method to be referenced when applying the OCC may be information configured by the base station to the UE. Based on the proposed method of the present disclosure, corresponding to an uplink data channel (e.g., a PUSCH) (and/or repeated transmission thereof) following physical slot indexing and/or available slot indexing, there is an advantage that the OCC can also be applied based on physical slot indexing and/or available slot indexing.

The [Proposed Method #06] may be applied in combination with other proposed method(s) within a range where the proposed operations do not conflict.

[Proposed Method #07] When a UE may apply an OCC to an uplink data channel (e.g., a PUSCH) (and/or repeated transmission thereof), a base station may configure/define/indicate a plurality of OCC lengths to the UE as the OCC-related configuration, and the UE may select and apply one of the plurality of OCC lengths based on a transmission interval/length (on a time/frequency axis) of the (its own) uplink data channel and/or the number of repeated transmissions and/or a channel environment. Herein, for example, whether to apply the OCC may be configured/indicated by the base station. Herein, for example, the OCC application interval may follow the configuration of an OCC application unit and/or an OCC length.

For example, in a non-terrestrial network-based next-generation mobile communication system based on an embodiment of the present disclosure, assume that a UE transmits an uplink data channel (e.g., a PUSCH). For example, the non-terrestrial network may include a UE, a satellite, and a base station, a service link may connect between the UE and the satellite, and a feeder link may connect between the satellite and the base station. Herein, for example, the UE may support transmission of an uplink data channel (e.g., a PUSCH) to which an OCC is applied for the purpose of increasing uplink capacity and the like.

Herein, for example, when the UE intends to apply an OCC to an uplink data channel (e.g., a PUSCH) (and/or repeated transmission thereof), a case may occur where some transmissions among the uplink data channel (e.g., a PUSCH) (and/or repeated transmission thereof) are omitted or canceled. Herein, for example, if the UE is configured with only a single OCC length, the corresponding OCC length may be in a form no longer suitable for a transmission interval of a reduced/changed uplink data channel (e.g., a PUSCH) (and/or repeated transmission thereof). Therefore, in the present disclosure, when the UE may apply an OCC to an uplink data channel (e.g., a PUSCH) (and/or repeated transmission thereof), the base station may configure/define/indicate a plurality of OCC lengths to the UE as the OCC-related configuration, and the UE may select and apply one of the plurality of OCC lengths based on a transmission interval/length (on a time/frequency axis) of the (its own) uplink data channel and/or the number of repeated transmissions and/or a channel environment. Based on the proposed method of the present disclosure, by allowing the UE to apply other OCC length candidates when a UL transmission is omitted and/or an OCC application condition is not satisfied, there is an advantage that orthogonality can still be supported. For example, the UE may select/apply the OCC length in the form of starting from application of a long OCC length, and attempting application of the next longest OCC length when a UL transmission is omitted and/or an OCC application condition is not satisfied.

The [Proposed Method #07] may be applied in combination with other proposed method(s) within a range where the proposed operations do not conflict.

[Proposed Method #08] When a UE may apply an OCC to an uplink data channel (e.g., a PUSCH) (and/or repeated transmission thereof), a base station and/or the UE may (pre-)configure and/or (pre-)define OCC index hopping, and when the OCC index hopping is applied, a hopping interval may be (pre-)configured and/or (pre-)defined in one or more of the following methods:
(1) Configured and/or defined in units of a symbol/slot (or a multiple thereof)
(2) Configured and/or defined in units of an OCC length (or a multiple thereof)
(3) Configured and/or defined in units of a (nominal) TDW (or a multiple thereof)

Herein, for example, whether to apply the OCC may be configured/indicated by the base station. Herein, for example, the OCC may be applied over repeated transmissions. Herein, for example, the OCC application interval may follow the configuration of an OCC application unit and/or an OCC length. Herein, for example, the OCC may be applied in units of a multiple of slots on a time axis. Herein, for example, the (nominal) time domain window (TDW) may refer to a (nominal) time interval in which the UE is expected to maintain phase continuity and/or power consistency, and the base station may (pre-)configure/define/indicate it to the UE. Herein, for example, the hopping interval may refer to a (time/frequency) interval in which a single hop is maintained when OCC index hopping is applied. Herein, for example, the hopping interval may be calculated based on physical slot indexing and/or available slot indexing. Herein, for example, the base station may (pre-)configure and/or (pre-)define a slot indexing method to be referenced for the hopping interval. Herein, for example, the physical slot may refer to a physically defined scheduling unit (on a time axis). Herein, for example, the available slot may refer to a slot in which the UE can completely transmit an allocated PUSCH resource. For example, if some (OFDM) symbol(s) among scheduled PUSCH resources within a slot are invalid symbol(s) (e.g., a downlink transmission symbol and/or a synchronization signal transmission symbol, etc.), the corresponding slot may not be an available slot. Herein, for example, if the hopping interval is larger than a (nominal) TDW, the UE may invalidate the OCC index hopping application and/or the OCC application. For example, the UE may apply an OCC without OCC index hopping or may not apply an OCC. Herein, for example, the base station may configure and/or indicate an OCC index offset to be additionally applied to the OCC index hopping to the UE.

For example, in a non-terrestrial network-based next-generation mobile communication system based on an embodiment of the present disclosure, assume that a UE transmits an uplink data channel (e.g., a PUSCH). For example, the non-terrestrial network may include a UE, a satellite, and a base station, a service link may connect between the UE and the satellite, and a feeder link may connect between the satellite and the base station. Herein, for example, the UE may support transmission of an uplink data channel (e.g., a PUSCH) to which an OCC is applied for the purpose of increasing uplink capacity and the like.

Herein, for example, when the UE applies an OCC to an uplink data channel (e.g., a PUSCH) (and/or repeated transmission thereof), the uplink data channel (e.g., a PUSCH) (and/or repeated transmission thereof) may be an uplink data channel scheduled based on a TYPE1 configured grant (CG). Herein, for example, if a fixed OCC index is applied to an uplink data channel (e.g., a PUSCH) (and/or repeated transmission thereof) based on a TYPE1 CG, it may continuously collide with an uplink data channel (e.g., a PUSCH) (and/or repeated transmission thereof) based on a TYPE1 CG scheduled with the same resource in an adjacent cell and/or an adjacent beam and/or an adjacent footprint. Herein, for example, it may be considered that the UE supports OCC index hopping for an OCC applied to the uplink data channel (e.g., a PUSCH) (and/or repeated transmission thereof). Therefore, in the present disclosure, when the UE may apply an OCC to an uplink data channel (e.g., a PUSCH) (and/or repeated transmission thereof), a base station and/or the UE may (pre-)configure and/or (pre-)define OCC index hopping, and if the OCC index hopping is applied, a hopping interval may be (pre-)configured and/or (pre-)defined in one or more of the following methods:
(1) Configured and/or defined in units of a slot/symbol (or a multiple thereof)
(2) Configured and/or defined in units of an OCC length (or a multiple thereof)
(3) Configured and/or defined in units of a (nominal) TDW (or a multiple thereof)

Based on the proposed method of the present disclosure, when the UE applies an OCC to the uplink data channel (e.g., a PUSCH) (and/or repeated transmission thereof), there is an advantage that an interference effect from a neighboring cell and/or a neighboring beam and/or a neighboring footprint can be randomized and/or mitigated through OCC index hopping.

The [Proposed Method #08] may be applied in combination with other proposed method(s) within a range where the proposed operations do not conflict.

[Proposed Method #09] When a UE may apply an OCC to an uplink data channel (e.g., a PUSCH) (and/or repeated transmission thereof), a base station and/or the UE may (pre-)configure and/or (pre-)define OCC index hopping, and a pattern of the OCC index hopping may be determined based on one or more of the following factors (or parameters):
(1) Scrambling ID (for PUSCH)
(2) Physical cell ID (PCDI)
(3) Synchronization signal block (SSB) index
(4) Beam reference signal index

Herein, for example, whether to apply the OCC may be configured/indicated by the base station. Herein, for example, the OCC may be applied over repeated transmissions. Herein, for example, the OCC application interval may follow the configuration of an OCC application unit and/or an OCC length.

For example, in a non-terrestrial network-based next-generation mobile communication system based on an embodiment of the present disclosure, assume that a UE transmits an uplink data channel (e.g., a PUSCH). For example, the non-terrestrial network may include a UE, a satellite, and a base station, a service link may connect between the UE and the satellite, and a feeder link may connect between the satellite and the base station. Herein, for example, the UE may support transmission of an uplink data channel (e.g., a PUSCH) to which an OCC is applied for the purpose of increasing uplink capacity and the like.

Herein, for example, when the UE applies an OCC to an uplink data channel (e.g., a PUSCH) (and/or repeated transmission thereof), the uplink data channel (e.g., a PUSCH) (and/or repeated transmission thereof) may be an uplink data channel scheduled based on a TYPE1 configured grant (CG). Herein, for example, if a fixed OCC index is applied to an uplink data channel (e.g., a PUSCH) (and/or repeated transmission thereof) based on a TYPE1 CG, it may continuously collide with an uplink data channel (e.g., a PUSCH) (and/or repeated transmission thereof) based on a TYPE1 CG scheduled with the same resource in an adjacent cell and/or an adjacent beam and/or an adjacent footprint. Herein, for example, it may be considered that the UE supports OCC index hopping for an OCC applied to the uplink data channel (e.g., a PUSCH) (and/or repeated transmission thereof). Therefore, in the present disclosure, when a UE may apply an OCC to an uplink data channel (e.g., a PUSCH) (and/or repeated transmission thereof), a base station and/or the UE may (pre-)configure and/or (pre-)define OCC index hopping, and a pattern of the OCC index hopping may be determined based on one or more of the following factors (or parameters):
(1) Scrambling ID (for PUSCH)
(2) Physical cell ID (PCDI)
(3) Synchronization signal block (SSB) index
(4) Beam reference signal index

Based on the proposed method of the present disclosure, when the UE applies an OCC to the uplink data channel (e.g., a PUSCH) (and/or repeated transmission thereof), there is an advantage that an interference effect from a neighboring cell and/or a neighboring beam and/or a neighboring footprint can be randomized and/or mitigated through OCC index hopping.

The [Proposed Method #09] may be applied in combination with other proposed method(s) within a range where the proposed operations do not conflict.

[Proposed Method #10] When a UE may apply an OCC to an uplink data channel (e.g., a PUSCH) (and/or repeated transmission thereof), the UE may determine an OCC length (based on an implicit rule) based on a transmission interval/length and/or the number of repeated transmissions of the uplink data channel (e.g., a PUSCH). Herein, for example, whether to apply the OCC may be configured/indicated by the base station. Herein, for example, the OCC may be applied over repeated transmissions. Herein, for example, the OCC application interval may follow the configuration of an OCC application unit and/or an OCC length. Herein, for example, the implicit rule may be a rule (pre-)configured and/or (pre-)promised between the base station and the UE. Herein, for example, when determining the OCC length, the UE may select a number suitable for a transmission interval/length and/or the number of repeated transmissions of an uplink data channel (e.g., a PUSCH) among numbers expressible as a power of 2.

For example, in a non-terrestrial network-based next-generation mobile communication system based on an embodiment of the present disclosure, assume that a UE transmits an uplink data channel (e.g., a PUSCH). For example, the non-terrestrial network may include a UE, a satellite, and a base station, a service link may connect between the UE and the satellite, and a feeder link may connect between the satellite and the base station. Herein, for example, the UE may support transmission of an uplink data channel (e.g., a PUSCH) to which an OCC is applied for the purpose of increasing uplink capacity and the like.

Herein, for example, the UE may apply an OCC over repeated transmissions of an uplink data channel (e.g., a PUSCH). Herein, for example, the OCC application unit may be defined as the repeated transmission unit (or a multiple thereof). Herein, for example, the OCC length may be determined (based on an implicit rule) based on a transmission interval/length and/or the number of repeated transmissions of the uplink data channel (e.g., a PUSCH) without a separate explicit configuration/indication. Based on the proposed method of the present disclosure, there is an advantage that the OCC length can be determined based on a method agreed upon between the base station and the UE without causing a separate signaling load for indicating the OCC length.

The [Proposed Method #10] may be applied in combination with other proposed method(s) within a range where the proposed operations do not conflict.

[Proposed Method #11] When a UE may apply an OCC to an uplink data channel (e.g., a PUSCH) (and/or repeated transmission thereof), if an (actual) time domain window (TDW) is smaller than a (configured/indicated) OCC length, the UE may perform one or more of the following operations:
(1) Non-application/(partial) application of an OCC
(2) Omitting (all) PUSCH transmissions related to a resource group to which an OCC is applied

Herein, for example, whether to apply the OCC may be configured/indicated by the base station. Herein, for example, the OCC may be applied over repeated transmissions. Herein, for example, the OCC application interval may follow the configuration of an OCC application unit and/or an OCC length. Herein, for example, the (actual) time domain window (TDW) may refer to an actual time interval in which the UE is expected to maintain phase continuity and/or power consistency, and may be an interval occurring within a (nominal) TDW (pre-)configured/defined/indicated by a base station. For example, the (actual) TDW may be defined based on an event occurrence timing. Herein, for example, the event may refer to an incident in which phase continuity and/or power consistency is not maintained, and may be classified into a dynamic event (e.g., an event triggered by DCI or a MAC-CE) and a semi-static event (an event other than a dynamic event). Herein, for example, the (nominal) time domain window (TDW) may refer to a (nominal) time interval in which the UE is expected to maintain phase continuity and/or power consistency, and the base station may (pre-)configure/define/indicate it to the UE.

For example, in a non-terrestrial network-based next-generation mobile communication system based on an embodiment of the present disclosure, assume that a UE transmits an uplink data channel (e.g., a PUSCH). For example, the non-terrestrial network may include a UE, a satellite, and a base station, a service link may connect between the UE and the satellite, and a feeder link may connect between the satellite and the base station. Herein, for example, the UE may support transmission of an uplink data channel (e.g., a PUSCH) to which an OCC is applied for the purpose of increasing uplink capacity and the like.

Herein, for example, when a specific event occurs, the UE may not guarantee maintaining phase continuity and/or power consistency for a transmission signal. Herein, for example, the event may refer to an incident in which phase continuity and/or power consistency is not maintained, and may be classified into a dynamic event (e.g., an event triggered by DCI or a MAC-CE) and a semi-static event (an event other than a dynamic event). Herein, for example, the (actual) TDW may be determined based on the occurrence of the event. Herein, for example, the (actual) time domain window (TDW) may refer to an actual time interval in which the UE is expected to maintain phase continuity and/or power consistency, and may be an interval occurring within a (nominal) TDW (pre-)configured/defined/indicated by a base station. For example, the (actual) TDW may be defined based on an event occurrence timing. Herein, for example, if the (actual) TDW is smaller than an OCC application interval and/or an OCC length to be applied by the UE to an uplink data channel (e.g., a PUSCH) (and/or repeated transmission thereof), orthogonality within the OCC application interval and/or the OCC length may not be guaranteed. Therefore, in the corresponding case, the UE may not apply an OCC, or may omit (all) PUSCH transmissions related to a resource group to which the corresponding OCC is applied in order not to exert an interference effect on other transmissions. Based on the proposed method of the present disclosure, when orthogonality of an OCC within an OCC application interval and/or an OCC length for an uplink data channel (e.g., a PUSCH) (and/or repeated transmission thereof) is not guaranteed, by not applying an OCC or omitting a transmission in a resource group to which an OCC is applied, an effect of facilitating UE operations or reducing an interference effect can be expected.

The [Proposed Method #11] may be applied in combination with other proposed method(s) within a range where the proposed operations do not conflict.

[Proposed Method #12] When a UE may apply an OCC to an uplink data channel (e.g., a PUSCH) (and/or repeated transmission thereof), the UE may not apply a UE operation related to event occurrence within an OCC application interval and/or an OCC length. For example, the UE may not apply one or more of the following operation(s) within the OCC application interval and/or the OCC length. For example, the UE may apply the operation(s) at a timing after the OCC application interval and/or the OCC length:
(1) Downlink (DL) reception and/or monitoring
(2) Other UL transmission(s) among the PUSCH (and/or repeated transmission thereof)
(3) Omitting/canceling a UL transmission
(4) Frequency hopping
(5) Applying a UL timing advance (TA) (indicated by a MAC CE)
(6) SRS resource set association
(7) Updating ephemeris (or orbit information of a non-terrestrial base station or a satellite) information
(8) Updating a (common) timing advance (TA)

Herein, for example, whether to apply the OCC may be configured/indicated by the base station. Herein, for example, the OCC may be applied over repeated transmissions. Herein, for example, the OCC application interval may follow the configuration of an OCC application unit and/or an OCC length. Herein, for example, the event may refer to an incident in which phase continuity and/or power consistency is not maintained, and may be classified into a dynamic event (e.g., an event triggered by DCI or a MAC-CE) and a semi-static event (an event other than a dynamic event). Herein, for example, the ephemeris information may refer to moving orbit information of a non-terrestrial base station or a satellite. Herein, for example, the (common) timing advance (TA) may refer to a TA commonly applied to UEs in a non-terrestrial network, and may be a value applied by the UE based on a parameter configured by a base station (or a network) and a (pre-)defined/configured formula.

For example, in a non-terrestrial network-based next-generation mobile communication system based on an embodiment of the present disclosure, assume that a UE transmits an uplink data channel (e.g., a PUSCH). For example, the non-terrestrial network may include a UE, a satellite, and a base station, a service link may connect between the UE and the satellite, and a feeder link may connect between the satellite and the base station. Herein, for example, the UE may support transmission of an uplink data channel (e.g., a PUSCH) to which an OCC is applied for the purpose of increasing uplink capacity and the like.

Herein, for example, when a specific event occurs, the UE may not guarantee maintaining phase continuity and/or power consistency for a transmission signal. Herein, for example, the event may refer to an incident in which phase continuity and/or power consistency is not maintained, and may be classified into a dynamic event (e.g., an event triggered by DCI or a MAC-CE) and a semi-static event (an event other than a dynamic event). Herein, for example, when the event occurs within an OCC application interval and/or an OCC length to be applied by the UE to an uplink data channel (e.g., a PUSCH) (and/or repeated transmission thereof), orthogonality and/or validity may not be guaranteed. Therefore, in the present disclosure, when the UE may apply an OCC to an uplink data channel (e.g., a PUSCH) (and/or repeated transmission thereof), the UE may not apply a UE operation related to event occurrence within an OCC application interval and/or an OCC length. For example, the UE may not apply one or more of the following operation(s) within the OCC application interval and/or the OCC length:
(1) Downlink (DL) reception and/or monitoring
(2) Other UL transmission(s) among the PUSCH (and/or repeated transmission thereof)
(3) Omitting/canceling a UL transmission
(4) Frequency hopping
(5) Applying a UL timing advance (TA) (indicated by a MAC CE)
(6) SRS resource set association
(7) Updating ephemeris (or orbit information of a non-terrestrial base station or a satellite) information
(8) Updating a (common) timing advance (TA)

Herein, for example, the UE may apply the operation(s) outside the OCC application interval and/or the OCC length. Based on the proposed method of the present disclosure, when applying an OCC to an uplink data channel (e.g., a PUSCH) (and/or repeated transmission thereof), by making the UE guarantee orthogonality and/or validity of the OCC as much as possible, there is an advantage that utility of the OCC can be increased.

The [Proposed Method #12] may be applied in combination with other proposed method(s) within a range where the proposed operations do not conflict.

[Proposed Method #13] When a UE may apply an OCC to a transmission resource (or repeated transmission thereof) of an uplink data channel (e.g., a PUSCH), if a bit field indicating an OCC parameter (hereinafter, a first bit field) and a bit field indicating a transmission parameter other than the OCC parameter (hereinafter, a second bit field) exist in a dynamic control channel (e.g., DCI), the UE may determine it as an OCC non-application operation if a specific state of the first bit field (hereinafter, a first state) and/or a specific state of the second bit field (hereinafter, a second state) is indicated. Herein, for example, the first bit field may be a bit field indicating an OCC index and/or an OCC length and/or an OCC type. Herein, for example, the first bit field may be the same bit field as or a bit field interlocked with a bit field indicating an antenna port of a DM-RS. Herein, for example, the second bit field may be a bit field indicating a redundancy version (RV) for a transport block (TB) and/or a bit field indicating frequency hopping. Herein, for example, the interpretation of the second bit field may vary depending on the presence or absence of the first bit field. For example, if the first bit field exists, prior information and/or higher layer configuration information for interpreting the second bit field may be separately provided to the UE. Herein, for example, the first state may be a state representing a state in which OCC sequences all have a value of '1' (e.g., [1 1] if an OCC length is 2, [1 1 1 1] if an OCC length is 4, etc.). Herein, for example, the second state may be a state corresponding to 'RV ID = 1' and/or a specific RV cycling pattern (e.g., [1 0 2 3]).

For example, in a non-terrestrial network-based next-generation mobile communication system based on an embodiment of the present disclosure, assume that a UE transmits an uplink data channel (e.g., a PUSCH). For example, the non-terrestrial network may include a UE, a satellite, and a base station, a service link may connect between the UE and the satellite, and a feeder link may connect between the satellite and the base station. Herein, for example, the UE may support transmission of an uplink data channel (e.g., a PUSCH) to which an OCC is applied for the purpose of increasing uplink capacity and the like.

Herein, for example, the base station (or a network) may support delivery of an OCC parameter through a dynamic control channel (e.g., DCI) to the UE for transmission of the uplink data channel (e.g., a PUSCH) to which the OCC is applied. Herein, for example, if there is no other UE multiplexed together during the PUSCH transmission, it may be preferable to release the OCC application. For example, if an OCC is applied to repeated PUSCH transmissions, when UCI is included in the PUSCH (e.g., UCI piggyback), repeated UCI transmission within a resource group to which an OCC is applied should be guaranteed to maintain OCC orthogonality, so a signal load for UCI transmission may be large. On the other hand, for example, if an OCC is not applied to repeated PUSCH transmissions, since UCI may be transmitted by being included only within PUSCH resources overlapped on the time axis, a signal load for UCI transmission may be small. Therefore, unless the UE is in a situation multiplexed with another UE, it may be preferable for the base station (or a network node) to indicate the UE to release the OCC application. Herein, for example, the release of the OCC application may be indicated by a dedicated bit field within a dynamic control channel (hereinafter, dynamic control information (DCI)), but a DCI size may be changed based on the addition of a new bit field. Due to this, a burden may occur where the UE has to support a high-complexity reception operation of performing blind detection on multiple DCI formats/sizes. Therefore, in the present disclosure, when the UE may apply an OCC to a transmission resource (or repeated transmission thereof) of an uplink data channel (e.g., a PUSCH), if a bit field indicating an OCC parameter (hereinafter, a first bit field) and a bit field indicating a transmission parameter other than the OCC parameter (hereinafter, a second bit field) exist in a dynamic control channel (e.g., DCI), the UE may determine it as an OCC non-application operation if a specific state of the first bit field (hereinafter, a first state) and/or a specific state of the second bit field (hereinafter, a second state) is indicated. For example, the first bit field may be a bit field indicating an OCC index. For example, the second bit field may be a bit field indicating a redundancy version (RV) for a transport block (TB). For example, the first state may be a state representing a state in which OCC sequences all have a value of '1' (e.g., [1 1] if an OCC length is 2, [1 1 1 1] if an OCC length is 4, etc.). For example, the second state may be a state corresponding to 'RV ID = 1' and/or a specific RV cycling pattern (e.g., [1 0 2 3]).

Based on the proposed method of the present disclosure, there is an advantage that an OCC application/application release operation for an uplink data channel (e.g., a PUSCH) (and/or repeated transmission thereof) can be dynamically indicated without a separate dedicated bit field or an increase in control signal transmission load.

The [Proposed Method #13] may be applied in combination with other proposed method(s) within a range where the proposed operations do not conflict.

[Proposed Method #14] When a UE may apply an OCC to a transmission resource (or repeated transmission thereof) of an uplink data channel (e.g., a PUSCH), if the UE may apply an OCC over repeated transmissions of an uplink data channel (e.g., a PUSCH), a base station (or a network node) may configure/indicate the UE to omit PUSCH transmission in units of an OCC group within the repeated transmission interval. Herein, for example, whether to apply the OCC may be configured/indicated by the base station. Herein, for example, the OCC may be applied over repeated transmissions. Herein, for example, the OCC group may refer to a resource group to which the same OCC sequence is applied. Herein, for example, the OCC may be applied over repeated transmissions (on a time axis and/or a frequency axis) of an uplink data channel (e.g., a PUSCH). Herein, for example, the repeated transmission interval (on a time/frequency axis) for the uplink data channel may be configured/indicated to be equal to or longer than an OCC application interval (or OCC length) (on a time/frequency axis).

For example, in a non-terrestrial network-based next-generation mobile communication system based on an embodiment of the present disclosure, assume that a UE transmits an uplink data channel (e.g., a PUSCH). For example, the non-terrestrial network may include a UE, a satellite, and a base station, a service link may connect between the UE and the satellite, and a feeder link may connect between the satellite and the base station. Herein, for example, the UE may support transmission of an uplink data channel (e.g., a PUSCH) to which an OCC is applied for the purpose of increasing uplink capacity and the like.

Herein, for example, a PUSCH (repeated) transmission to which the OCC is applied (hereinafter, a first transmission) may collide in the same resource with another PUSCH transmission that does not support an OCC (e.g., a PUSCH transmission for a legacy UE) (hereinafter, a second transmission). Herein, for example, to reduce an interference effect on the second transmission, a transmission omission for resources colliding with the second transmission in the first transmission may be performed. Herein, for example, resources omitted within the first transmission may be resources in units of an OCC group. Herein, for example, the OCC group may refer to a resource group to which the same OCC sequence is applied. For example, when the first transmission is divided into a plurality of OCC groups, the base station (or a network node) may configure/indicate the UE to omit transmission for OCC group(s) including at least one or more resources colliding with the second transmission among the OCC group(s).

Based on the proposed method of the present disclosure, when applying an OCC to an uplink data channel (e.g., a PUSCH) (and/or repeated transmission thereof), by indicating and/or configuring a transmission omission in units of an OCC group to which an OCC is applied, an effect of blocking and/or preventing an interference effect on channels that cannot be multiplexed with the PUSCH to which the OCC is applied can be obtained.

The [Proposed Method #14] may be applied in combination with other proposed method(s) within a range where the proposed operations do not conflict.

[Proposed Method #15] When a UE may apply an OCC to a transmission resource (or repeated transmission thereof) of an uplink data channel (e.g., a PUSCH) for Msg3, the UE may apply a random access radio network temporary identifier ((RA-) RNTI) for Msg3 in one or more of the following methods:
(1) The UE may select and apply a fixed (RA-) RNTI.
(2) The UE may select and apply a (pre-)configured (RA-) RNTI.
(3) The UE may (randomly) select and apply an (RA-) RNTI.
(4) The UE may (randomly) select a (virtual) RACH resource, and the UE may apply an (RA-) RNTI determined based on the RACH resource.
(5) The UE may select and apply an (RA-) RNTI based on the time resource/frequency resource/OCC resource of Msg3.
(6) The UE may select and apply an (RA-) RNTI based on UE identification information and/or a contention resolution ID.

Herein, for example, Msg3 may be a contention-based (CB) Msg3 early data transmission (EDT). For example, the contention-based (CB) Msg3 early data transmission (EDT) may refer to Msg3 transmitted by the UE omitting transmissions for Msg1 (a RACH preamble) and Msg2 (a random access response). Herein, for example, the RACH resource may refer to an NPRACH (NB-IoT PRACH) resource. Herein, for example, the time resource of Msg3 may include a resource at a start timing and/or a resource at an end timing and/or the number of repetitions and/or the number of slots in which one transport block (TB) is transmitted and/or the number of resource units (e.g., N_{RU}). Herein, for example, the (RA-) RNTI may be an RNTI utilized for determining a data scrambling sequence and/or a DM-RS sequence and/or a sequence for a CRC mask during Msg3 transmission.

For example, in a non-terrestrial network-based next-generation mobile communication system based on an embodiment of the present disclosure, assume that a UE transmits an uplink data channel (e.g., a PUSCH). For example, the non-terrestrial network may include a UE, a satellite, and a base station, a service link may connect between the UE and the satellite, and a feeder link may connect between the satellite and the base station. Herein, for example, the UE may support transmission of an uplink data channel (e.g., a PUSCH) to which an OCC is applied for the purpose of increasing uplink capacity and the like.

Herein, for example, the OCC application to the PUSCH may be applied also to Msg3 in the initial access procedure. For example, Msg3 may be repeatedly transmitted across a plurality of slots, and an OCC may be applied over the repeated transmissions. Herein, a method for determining an RA-RNTI applied to Msg3 needs to be defined. For example, if Msg3 is a CB Msg3 EDT transmitted by omitting Msg1 and/or Msg2 transmission, since there is no information of Msg1 and/or Msg2 that can be referenced, an RA-RNTI determination and/or application method for the CB Msg3 EDT may have to be newly defined.

Therefore, in the present disclosure, when the UE may apply an OCC to a transmission resource (or repeated transmission thereof) of an uplink data channel (e.g., a PUSCH) for Msg3, the UE may apply a random access radio network temporary identifier ((RA-) RNTI) for Msg3 in one or more of the following methods:
(1) The UE may select and apply a fixed (RA-) RNTI.
(2) The UE may select and apply a (pre-)configured (RA-) RNTI.
(3) The UE may (randomly) select and apply an (RA-) RNTI.
(4) The UE may (randomly) select a (virtual) RACH resource, and the UE may apply an (RA-) RNTI determined based on the RACH resource.
(5) The UE may select and apply an (RA-) RNTI based on the time resource/frequency resource/OCC resource of Msg3.
(6) The UE may select and apply an (RA-) RNTI based on UE identification information and/or a contention resolution ID.

Based on the proposed method of the present disclosure, there is an advantage that the UE can clearly determine an RA-RNTI even for the CB Msg3 EDT transmitted by omitting Msg1 and/or Msg2 transmission.

The [Proposed Method #15] may be applied in combination with other proposed method(s) within a range where the proposed operations do not conflict.

For example, a scrambling sequence generator may be initialized based on Equation 1. [Equation 1] ${c}_{init} = {c}_{RNTI} ⋅ {2}^{14} + {n}_{f} mod 2 ⋅ {2}^{13} + \left⌊{n}_{s}/2\right⌋ ⋅ {2}^{9} + {N}_{ID}^{Ncell}$

For example, nₛ may be the first slot of a codeword transmission. For example, in the case of an NPUSCH repetition, after every M^{NPUSCH}_{identical} codeword transmissions, the scrambling sequence may be reinitialized based on Equation 1, and in this case, nₛ and n_{f} may be configured as the first slot and the frame used for repeated transmission, respectively. For example, M^{NPUSCH}_{identical} may be configured for the UE and/or the base station.

For example, resource allocation information in an uplink DCI format N0 for NPUSCH transmission or configured by higher layers for NPUSCH transmission using a pre-configured uplink resource may indicate the following to a scheduled UE:
- A set of contiguously allocated subcarriers (n_{sc}) of a resource unit determined by the subcarrier indication field or by the higher layer parameter npusch-SubCarrierSetIndex in PUR-Config-NB
- A number of resource units (N_{RU}) determined by the resource assignment field according to Table 4 or by the higher layer parameter npusch-NumRUsIndex in PUR-Config-NB
- A repetition number (N_{Rep}) determined by the repetition number field according to Table 5, and for NPUSCH transmission using a pre-configured uplink resource, the UE may use the repetition number configured by higher layers, except for an NPUSCH using 16QAM where N_{Rep}=1.

For example, a subcarrier spacing Δf of NPUSCH transmission may be determined by the following:
- The higher layer parameter npusch-SubCarrierSetIndex, in the case of NPUSCH transmission using pre-configured uplink resources and subsequent NPUSCH transmissions until a narrowband random access response grant is received,
- Otherwise, the uplink subcarrier spacing field in the narrowband random access response grant.

For example, for NPUSCH transmission with a subcarrier spacing Δf=3.75kHz, n_{sc}=I_{sc}. Herein, for example, I_{sc} may be the subcarrier indication field, and I_{sc}=48, 49, ..., 63 may be reserved, or n_{sc} may be configured by the higher layer parameter npusch-SubCarrierSetIndex in PUR-Config-NB for NPUSCH transmissions using pre-configured uplink resources.

For example, for NPUSCH transmission with a subcarrier spacing Δf= 15kHz, the subcarrier indication field (I_{sc}) in DCI or npusch-SubCarrierSetIndex in PUR-Config-NB for NPUSCH transmissions using pre-configured uplink resources may determine a set of contiguously allocated subcarriers (n_{sc}) according to Table 3.

Table 3 shows an example of allocated subcarriers for an NPUSCH with Δf= 15kHz.

**[Table 3]**

| Subcarrier indication field (I_{sc}) | Set of Allocated subcarriers (n_{sc}) |
|---|---|
| 0-11 | I_{sc} |
| 12-15 | 3(I_{sc}-12)+{0,1,2} |
| 16-17 | 6(I_{sc}-16)+{0,1,2,3,4,5} |
| 18 | {0,1,2,3,4,5,6,7,8,9,10,11} |
| 19-63 | Reserved |

Table 4 shows an example of the number of resource units (N_{RU}) for an NPUSCH.

**[Table 4]**

| I_{RU} | N_{RU} |
|---|---|
| 0 | 1 |
| 1 | 2 |
| 2 | 3 |
| 3 | 4 |
| 4 | 5 |
| 5 | 6 |
| 6 | 8 |
| 7 | 10 |

Table 5 shows an example of the number of repetitions (N_{Rep}) for an NPUSCH.

**[Table 5]**

| I_{Rep} | N_{Rep} |
|---|---|
| 0 | 1 |
| 1 | 2 |
| 2 | 4 |
| 3 | 8 |
| 4 | 16 |
| 5 | 32 |
| 6 | 64 |
| 7 | 128 |

[Proposed Method #16] When a UE may apply an OCC to a transmission resource (or repeated transmission thereof) of an uplink data channel (e.g., a PUSCH) for Msg3, the UE may apply an OCC parameter for Msg3 in one or more of the following methods:
(1) The UE may select and apply a (pre-)configured OCC parameter.
(2) The UE may (randomly) select and apply an OCC parameter.
(3) The UE may (randomly) select a (virtual) RACH resource, and the UE may (randomly) select and apply an OCC parameter determined based on the RACH resource.
(4) The UE may select and apply an OCC parameter based on the time resource/frequency resource/OCC resource of Msg3.
(5) The UE may select and apply an OCC parameter based on UE identification information and/or a contention resolution ID.

Herein, for example, Msg3 may be a contention-based (CB) Msg3 early data transmission (EDT). For example, the contention-based (CB) Msg3 early data transmission (EDT) may refer to Msg3 transmitted by the UE omitting transmissions for Msg1 (a RACH preamble) and Msg2 (a random access response). Herein, for example, the OCC parameter may include at least one or more of OCC enable/disable and/or an OCC index and/or an OCC type and/or an OCC codeword and/or an OCC length.

For example, in a non-terrestrial network-based next-generation mobile communication system based on an embodiment of the present disclosure, assume that a UE transmits an uplink data channel (e.g., a PUSCH). For example, the non-terrestrial network may include a UE, a satellite, and a base station, a service link may connect between the UE and the satellite, and a feeder link may connect between the satellite and the base station. Herein, for example, the UE may support transmission of an uplink data channel (e.g., a PUSCH) to which an OCC is applied for the purpose of increasing uplink capacity and the like.

Herein, for example, the OCC application to the PUSCH may be applied also to Msg3 in the initial access procedure. For example, Msg3 may be repeatedly transmitted across a plurality of slots, and an OCC may be applied over the repeated transmissions. Herein, a method for determining an OCC parameter applied to Msg3 needs to be defined. Therefore, in the present disclosure, when the UE may apply an OCC to a transmission resource (or repeated transmission thereof) of an uplink data channel (e.g., a PUSCH) for Msg3, the UE may apply an OCC parameter for Msg3 in one or more of the following methods:
(1) The UE may select and apply a (pre-)configured OCC parameter.
(2) The UE may (randomly) select and apply an OCC parameter.
(3) The UE may (randomly) select a (virtual) RACH resource, and the UE may (randomly) select and apply an OCC parameter determined based on the RACH resource.
(4) The UE may select and apply an OCC parameter based on the time resource/frequency resource/OCC resource of Msg3.
(5) The UE may select and apply an OCC parameter based on UE identification information and/or a contention resolution ID.

Based on the proposed method of the present disclosure, there is an advantage that the UE can clearly determine an OCC parameter for Msg3 to which an OCC is applied.

The [Proposed Method #16] may be applied in combination with other proposed method(s) within a range where the proposed operations do not conflict.

[Proposed Method #17] When a UE may apply an OCC to a transmission resource (or repeated transmission thereof) of an uplink data channel (e.g., a PUSCH) for Msg3, a transmission starting time of Msg3 to which the OCC is applied may be limited. Herein, for example, Msg3 may be a contention-based (CB) Msg3 early data transmission (EDT). For example, the contention-based (CB) Msg3 early data transmission (EDT) may refer to Msg3 transmitted by the UE omitting transmissions for Msg1 (a RACH preamble) and Msg2 (a random access response). Herein, for example, the transmission starting time of Msg3 may be given in the form of a resource grid determined in units of an OCC length (or a multiple thereof). For example, if an inter-slot OCC is applied and the OCC length is 2, the UE may determine the transmission starting time with 2 slots as a basic unit. Herein, for example, the transmission starting time of Msg3 may be limited in units of an OCC length (or a multiple thereof).

For example, in a non-terrestrial network-based next-generation mobile communication system based on an embodiment of the present disclosure, assume that a UE transmits an uplink data channel (e.g., a PUSCH). For example, the non-terrestrial network may include a UE, a satellite, and a base station, a service link may connect between the UE and the satellite, and a feeder link may connect between the satellite and the base station. Herein, for example, the UE may support transmission of an uplink data channel (e.g., a PUSCH) to which an OCC is applied for the purpose of increasing uplink capacity and the like.

Herein, for example, the OCC application to the PUSCH may be applied also to Msg3 in the initial access procedure. For example, Msg3 may be repeatedly transmitted across a plurality of slots, and an OCC may be applied over the repeated transmissions. Herein, for example, when an OCC is applied to Msg3, transmission starting locations of Msg3 transmitted by different UEs may have to be aligned. For example, the transmission timing for Msg3 may be restricted in the form of a resource grid having an OCC length as a basic unit. Based on the proposed method of the present disclosure, by aligning transmission starting locations of UEs for Msg3 to which an OCC is applied, there is an advantage of guaranteeing utility of the OCC.

The [Proposed Method #17] may be applied in combination with other proposed method(s) within a range where the proposed operations do not conflict.

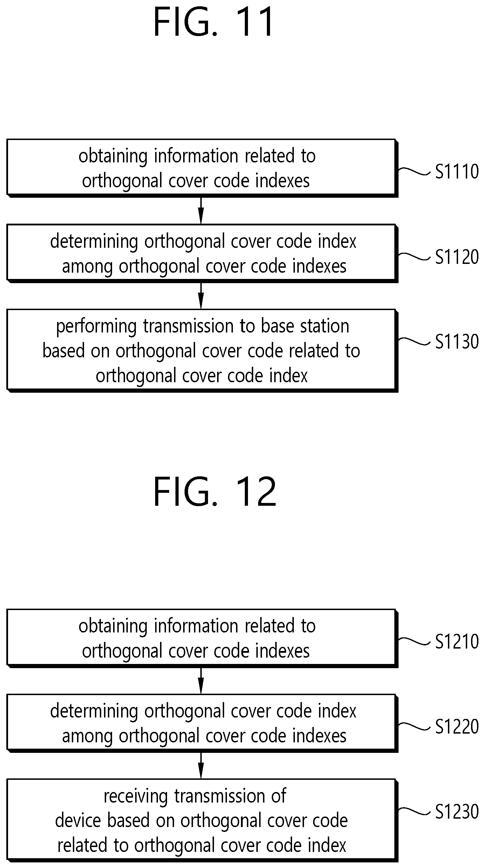

FIG. 11 shows a method for a device to perform wireless communication, based on an embodiment of the present disclosure. The embodiment of FIG. 11 may be combined with various embodiments of the present disclosure.

Referring to FIG. 11, in step S1110, the device may obtain information related to a plurality of orthogonal cover code indexes. In step S1120, the device may determine an orthogonal cover code index among the plurality of orthogonal cover code indexes. In step S1130, the device may perform a transmission to a base station based on an orthogonal cover code related to the orthogonal cover code index. For example, the orthogonal cover code index may be determined based on whether the transmission is a transmission for initial access.

For example, based on the transmission being a transmission for the initial access, the orthogonal cover code index may be determined based on at least one of a random access preamble identifier (ID), an orthogonal cover code index related to a random access channel, or a location of a grant within a random access response.

For example, based on the transmission being a transmission after the initial access, hopping of the orthogonal cover code index may be performed based on at least one of a scrambling ID, a physical cell ID, a synchronization signal block index, or a beam reference signal index. For example, the transmission may be performed based on a configured grant from the base station.

For example, the transmission may include an uplink data channel repetition, and the orthogonal cover code may be applied to the uplink data channel repetition.

Additionally, for example, the device may, based on an initial access resource, report a capability related to application of the orthogonal cover code to the transmission to the base station. For example, a random access preamble transmitted on the initial access resource configured between the base station and a device may represent that the device has a capability to be able to apply the orthogonal cover code to the transmission.

For example, a unit of application of the orthogonal cover code may be determined based on a unit of repetition of the transmission, and a length of the orthogonal cover code may be determined based on a number of repetitions of the transmission.

For example, in a procedure for the initial access, the orthogonal cover code index determined based on at least one of the random access preamble ID, the orthogonal cover code index related to the random access channel, or the location of the grant within the random access response may be hopped based on at least one of the scrambling ID, the physical cell ID, the synchronization signal block index, or the beam reference signal index.

Additionally, for example, the device may receive information related to an interval to which the orthogonal cover code is applied from the base station. For example, the information related to the interval to which the orthogonal cover code is applied may include at least one of information related to a starting location to which the orthogonal cover code is applied, information related to an ending location to which the orthogonal cover code is applied, or information related to a length of the interval to which the orthogonal cover code is applied.

For example, based on the transmission being an uplink data channel transmission without a random access preamble and a random access response for the initial access, a radio network temporary identifier (RNTI) may be selected based on at least one of a time resource, a frequency resource, an orthogonal cover code resource, identification information of a device, or a contention resolution ID, related to the transmission.

For example, based on the transmission being an uplink data channel transmission without a random access preamble and a random access response for the initial access, the orthogonal cover code index may be determined based on at least one of a time resource, a frequency resource, an orthogonal cover code resource, identification information of a device, or a contention resolution ID, related to the transmission.

For example, based on at least one of phase continuity or power consistency not being maintained within an interval to which the orthogonal cover code is applied, the transmission may be omitted.

The proposed method can be applied to devices based on various embodiments of the present disclosure. First, the processor 102 of the device 100 may obtain information related to a plurality of orthogonal cover code indexes. In addition, the processor 102 of the device 100 may determine an orthogonal cover code index among the plurality of orthogonal cover code indexes. In addition, the processor 102 of the device 100 may control the transceiver 106 to perform a transmission to a base station based on an orthogonal cover code related to the orthogonal cover code index. For example, the orthogonal cover code index may be determined based on whether the transmission is a transmission for initial access.

Based on an embodiment of the present disclosure, a device may be provided. For example, the device may comprise: at least one transceiver; at least one processor; and at least one memory connected to the at least one processor and storing instructions. For example, the instructions, based on being executed by the at least one processor, may cause the device to perform operations comprising: obtaining information related to a plurality of orthogonal cover code indexes; determining an orthogonal cover code index among the plurality of orthogonal cover code indexes; and performing a transmission to a base station based on an orthogonal cover code related to the orthogonal cover code index. For example, the orthogonal cover code index may be determined based on whether the transmission is a transmission for initial access.

Based on an embodiment of the present disclosure, a processing device adapted to control a device may be provided. For example, the processing device may comprise: at least one processor; and at least one memory connected to the at least one processor and storing instructions. For example, the instructions, based on being executed by the at least one processor, may cause the device to perform operations comprising: obtaining information related to a plurality of orthogonal cover code indexes; determining an orthogonal cover code index among the plurality of orthogonal cover code indexes; and performing a transmission to a base station based on an orthogonal cover code related to the orthogonal cover code index. For example, the orthogonal cover code index may be determined based on whether the transmission is a transmission for initial access.

Based on an embodiment of the present disclosure, a non-transitory computer-readable storage medium storing instructions may be provided. For example, the instructions, when executed, may cause a device to perform operations comprising: obtaining information related to a plurality of orthogonal cover code indexes; determining an orthogonal cover code index among the plurality of orthogonal cover code indexes; and performing a transmission to a base station based on an orthogonal cover code related to the orthogonal cover code index. For example, the orthogonal cover code index may be determined based on whether the transmission is a transmission for initial access.

FIG. 12 shows a method for a base station to perform wireless communication, based on an embodiment of the present disclosure. The embodiment of FIG. 12 may be combined with various embodiments of the present disclosure.

Referring to FIG. 12, in step S1210, the base station may obtain information related to a plurality of orthogonal cover code indexes. In step S1220, the base station may determine an orthogonal cover code index among the plurality of orthogonal cover code indexes. In step S1230, the base station may receive a transmission of a device based on an orthogonal cover code related to the orthogonal cover code index. For example, the orthogonal cover code index may be determined based on whether the transmission is a transmission for initial access.

For example, based on the transmission being a transmission for the initial access, the orthogonal cover code index may be determined based on at least one of a random access preamble identifier (ID), an orthogonal cover code index related to a random access channel, or a location of a grant within a random access response.

For example, based on the transmission being a transmission after the initial access, hopping of the orthogonal cover code index may be performed based on at least one of a scrambling ID, a physical cell ID, a synchronization signal block index, or a beam reference signal index. For example, the transmission may be performed based on a configured grant from the base station.

For example, the transmission may include an uplink data channel repetition, and the orthogonal cover code may be applied to the uplink data channel repetition.

Additionally, for example, the base station may, based on an initial access resource, receive a capability related to application of the orthogonal cover code to the transmission from the device. For example, a random access preamble transmitted on the initial access resource configured between the base station and a device may represent that the device has a capability to be able to apply the orthogonal cover code to the transmission.

For example, a unit of application of the orthogonal cover code may be determined based on a unit of repetition of the transmission, and a length of the orthogonal cover code may be determined based on a number of repetitions of the transmission.

For example, in a procedure for the initial access, the orthogonal cover code index determined based on at least one of the random access preamble ID, the orthogonal cover code index related to the random access channel, or the location of the grant within the random access response may be hopped based on at least one of the scrambling ID, the physical cell ID, the synchronization signal block index, or the beam reference signal index.

Additionally, for example, the base station may transmit information related to an interval to which the orthogonal cover code is applied to the device. For example, the information related to the interval to which the orthogonal cover code is applied may include at least one of information related to a starting location to which the orthogonal cover code is applied, information related to an ending location to which the orthogonal cover code is applied, or information related to a length of the interval to which the orthogonal cover code is applied.

For example, based on the transmission being an uplink data channel transmission without a random access preamble and a random access response for the initial access, a radio network temporary identifier (RNTI) may be selected based on at least one of a time resource, a frequency resource, an orthogonal cover code resource, identification information of a device, or a contention resolution ID, related to the transmission.

For example, based on the transmission being an uplink data channel transmission without a random access preamble and a random access response for the initial access, the orthogonal cover code index may be determined based on at least one of a time resource, a frequency resource, an orthogonal cover code resource, identification information of a device, or a contention resolution ID, related to the transmission.

For example, based on at least one of phase continuity or power consistency not being maintained within an interval to which the orthogonal cover code is applied, the transmission may be omitted.

The proposed method can be applied to devices based on various embodiments of the present disclosure. First, the processor 202 of the base station 200 may obtain information related to a plurality of orthogonal cover code indexes. In addition, the processor 202 of the base station 200 may determine an orthogonal cover code index among the plurality of orthogonal cover code indexes. In addition, the processor 202 of the base station 200 may control the transceiver 206 to receive a transmission of a device based on an orthogonal cover code related to the orthogonal cover code index. For example, the orthogonal cover code index may be determined based on whether the transmission is a transmission for initial access.

Based on an embodiment of the present disclosure, a base station may be provided. For example, the base station may comprise: at least one transceiver; at least one processor; and at least one memory connected to the at least one processor and storing instructions. For example, the instructions, based on being executed by the at least one processor, may cause the base station to perform operations comprising: obtaining information related to a plurality of orthogonal cover code indexes; determining an orthogonal cover code index among the plurality of orthogonal cover code indexes; and receiving a transmission of a device based on an orthogonal cover code related to the orthogonal cover code index. For example, the orthogonal cover code index may be determined based on whether the transmission is a transmission for initial access.

Based on an embodiment of the present disclosure, a processing device adapted to control a base station may be provided. For example, the processing device may comprise: at least one processor; and at least one memory connected to the at least one processor and storing instructions. For example, the instructions, based on being executed by the at least one processor, may cause the base station to perform operations comprising: obtaining information related to a plurality of orthogonal cover code indexes; determining an orthogonal cover code index among the plurality of orthogonal cover code indexes; and receiving a transmission of a device based on an orthogonal cover code related to the orthogonal cover code index. For example, the orthogonal cover code index may be determined based on whether the transmission is a transmission for initial access.

Based on an embodiment of the present disclosure, a non-transitory computer-readable storage medium storing instructions may be provided. For example, the instructions, when executed, may cause a base station to perform operations comprising: obtaining information related to a plurality of orthogonal cover code indexes; determining an orthogonal cover code index among the plurality of orthogonal cover code indexes; and receiving a transmission of a device based on an orthogonal cover code related to the orthogonal cover code index. For example, the orthogonal cover code index may be determined based on whether the transmission is a transmission for initial access.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

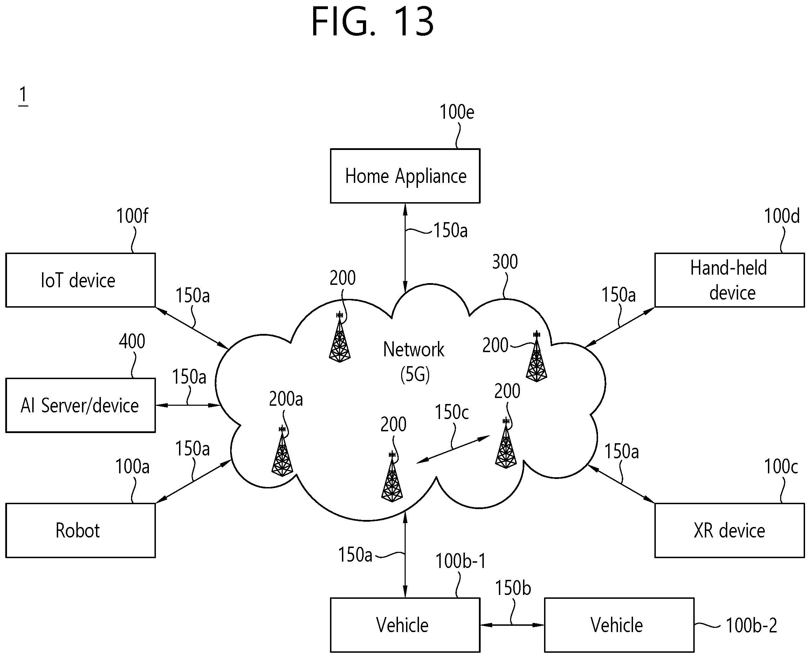

FIG. 13 shows a communication system 1, based on an embodiment of the present disclosure. The embodiment of FIG. 13 may be combined with various embodiments of the present disclosure.

Referring to FIG. 13, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone) and/or an Aerial Vehicle (AV) (e.g., Advanced Air Mobility (AAM)). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

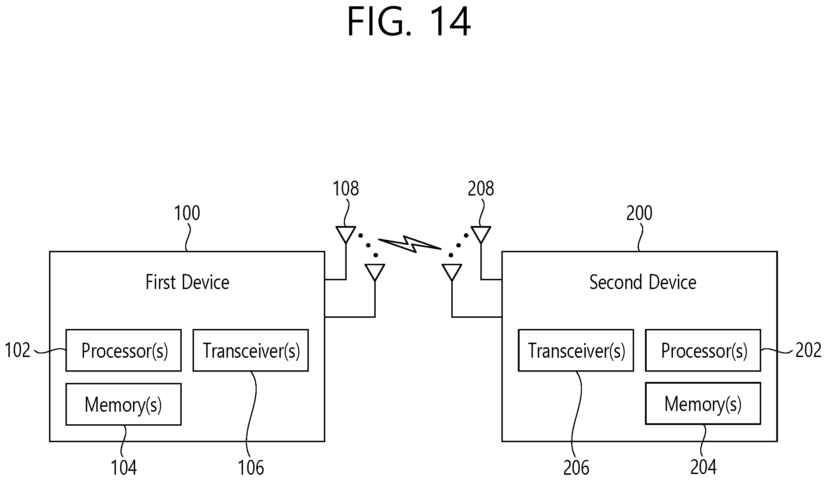

FIG. 14 shows wireless devices, based on an embodiment of the present disclosure. The embodiment of FIG. 14 may be combined with various embodiments of the present disclosure.

Referring to FIG. 14, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 13.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 206 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cache memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

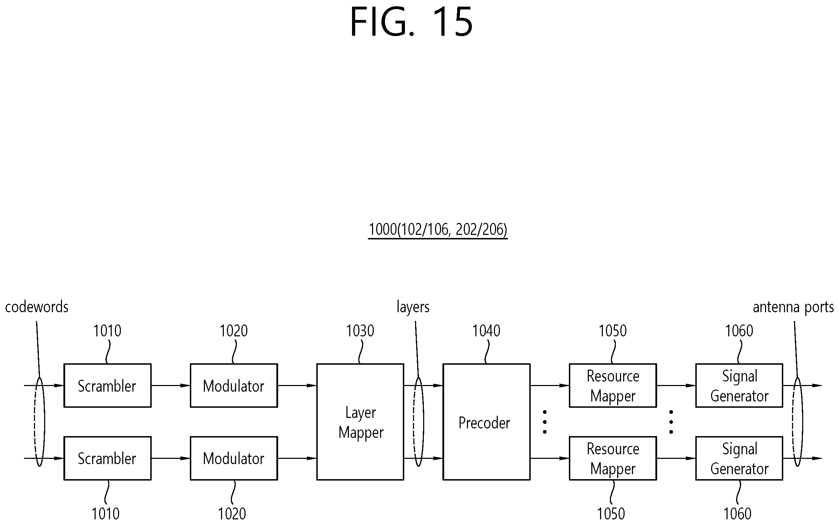

FIG. 15 shows a signal process circuit for a transmission signal, based on an embodiment of the present disclosure. The embodiment of FIG. 15 may be combined with various embodiments of the present disclosure.

Referring to FIG. 15, a signal processing circuit 1000 may include scramblers 1010, modulators 1020, a layer mapper 1030, a precoder 1040, resource mappers 1050, and signal generators 1060. An operation/function of FIG. 15 may be performed, without being limited to, the processors 102 and 202 and/or the transceivers 106 and 206 of FIG. 14. Hardware elements of FIG. 15 may be implemented by the processors 102 and 202 and/or the transceivers 106 and 206 of FIG. 14. For example, blocks 1010 to 1060 may be implemented by the processors 102 and 202 of FIG. 14. Alternatively, the blocks 1010 to 1050 may be implemented by the processors 102 and 202 of FIG. 14 and the block 1060 may be implemented by the transceivers 106 and 206 of FIG. 14.

Codewords may be converted into radio signals via the signal processing circuit 1000 of FIG. 15. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 15. For example, the wireless devices (e.g., 100 and 200 of FIG. 14) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

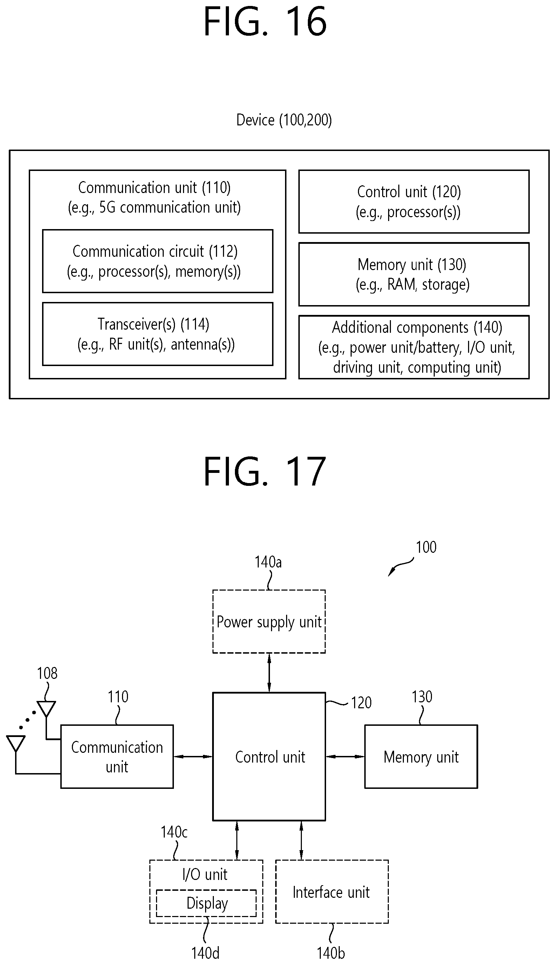

FIG. 16 shows another example of a wireless device, based on an embodiment of the present disclosure. The wireless device may be implemented in various forms according to a use-case/service (refer to FIG. 13). The embodiment of FIG. 16 may be combined with various embodiments of the present disclosure.

Referring to FIG. 16, wireless devices 100 and 200 may correspond to the wireless devices 100 and 200 of FIG. 14 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 14. For example, the transceiver(s) 114 may include the one or more transceivers 106 and 206 and/or the one or more antennas 108 and 208 of FIG. 14. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 13), the vehicles (100b-1 and 100b-2 of FIG. 13), the XR device (100c of FIG. 13), the hand-held device (100d of FIG. 13), the home appliance (100e of FIG. 13), the IoT device (100f of FIG. 13), a digital broadcast terminal, a hologram device, a public safety device, an MTC device, a medicine device, a fintech device (or a finance device), a security device, a climate/environment device, the AI server/device (400 of FIG. 13), the BSs (200 of FIG. 13), a network node, etc. The wireless device may be used in a mobile or fixed place according to a use-example/service.

In FIG. 16, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 16 will be described in detail with reference to the drawings.

FIG. 17 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 17 may be combined with various embodiments of the present disclosure.

Referring to FIG. 17, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 16, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

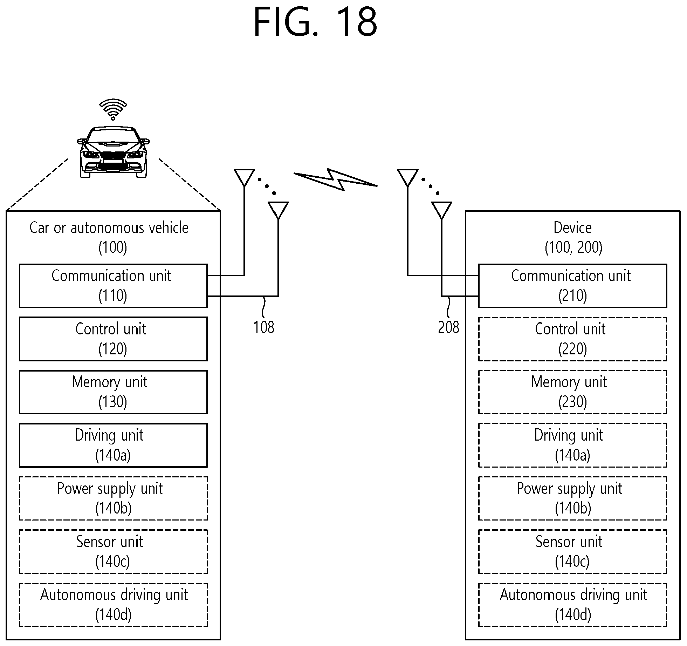

FIG. 18 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 18 may be combined with various embodiments of the present disclosure.

Referring to FIG. 18, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 16, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method, comprising:
obtaining information related to a plurality of orthogonal cover code indexes;
determining an orthogonal cover code index among the plurality of orthogonal cover code indexes; and
performing a transmission to a base station based on an orthogonal cover code related to the orthogonal cover code index,
wherein the orthogonal cover code index is determined based on whether the transmission is a transmission for initial access.

2. The method of claim 1, wherein, based on the transmission being a transmission for the initial access, the orthogonal cover code index is determined based on at least one of a random access preamble identifier (ID), an orthogonal cover code index related to a random access channel, or a location of a grant within a random access response.

3. The method of claim 1, wherein, based on the transmission being a transmission after the initial access, hopping of the orthogonal cover code index is performed based on at least one of a scrambling ID, a physical cell ID, a synchronization signal block index, or a beam reference signal index.

4. The method of claim 3, wherein the transmission is performed based on a configured grant from the base station.

5. The method of claim 1, wherein the transmission includes an uplink data channel repetition, and the orthogonal cover code is applied to the uplink data channel repetition.

6. The method of claim 1, further comprising:
based on an initial access resource, reporting a capability related to application of the orthogonal cover code to the transmission to the base station.

7. The method of claim 6, wherein a random access preamble transmitted on the initial access resource configured between the base station and a device represents that the device has a capability to be able to apply the orthogonal cover code to the transmission.

8. The method of claim 1, wherein a unit of application of the orthogonal cover code is determined based on a unit of repetition of the transmission, and a length of the orthogonal cover code is determined based on a number of repetitions of the transmission.

9. The method of claim 1, wherein, in a procedure for the initial access, the orthogonal cover code index determined based on at least one of the random access preamble ID, the orthogonal cover code index related to the random access channel, or the location of the grant within the random access response is hopped based on at least one of the scrambling ID, the physical cell ID, the synchronization signal block index, or the beam reference signal index.

10. The method of claim 1, further comprising:
receiving information related to an interval to which the orthogonal cover code is applied from the base station,
wherein the information related to the interval to which the orthogonal cover code is applied includes at least one of information related to a starting location to which the orthogonal cover code is applied, information related to an ending location to which the orthogonal cover code is applied, or information related to a length of the interval to which the orthogonal cover code is applied.

11. The method of claim 1, wherein, based on the transmission being an uplink data channel transmission without a random access preamble and a random access response for the initial access, a radio network temporary identifier (RNTI) is selected based on at least one of a time resource, a frequency resource, an orthogonal cover code resource, identification information of a device, or a contention resolution ID, related to the transmission.

12. The method of claim 1, wherein, based on the transmission being an uplink data channel transmission without a random access preamble and a random access response for the initial access, the orthogonal cover code index is determined based on at least one of a time resource, a frequency resource, an orthogonal cover code resource, identification information of a device, or a contention resolution ID, related to the transmission.

13. The method of claim 1, wherein, based on at least one of phase continuity or power consistency not being maintained within an interval to which the orthogonal cover code is applied, the transmission is omitted.

14. A device, comprising:
at least one transceiver;
at least one processor; and
at least one memory connected to the at least one processor and storing instructions that, based on being executed by the at least one processor, cause the device to perform operations comprising:
obtaining information related to a plurality of orthogonal cover code indexes;
determining an orthogonal cover code index among the plurality of orthogonal cover code indexes; and
performing a transmission to a base station based on an orthogonal cover code related to the orthogonal cover code index,
wherein the orthogonal cover code index is determined based on whether the transmission is a transmission for initial access.

15. A processing device adapted to control a device, the processing device comprising:
at least one processor; and
at least one memory connected to the at least one processor and storing instructions that, based on being executed by the at least one processor, cause the device to perform operations comprising:
obtaining information related to a plurality of orthogonal cover code indexes;
determining an orthogonal cover code index among the plurality of orthogonal cover code indexes; and
performing a transmission to a base station based on an orthogonal cover code related to the orthogonal cover code index,
wherein the orthogonal cover code index is determined based on whether the transmission is a transmission for initial access.

16. A non-transitory computer-readable storage medium storing instructions that, when executed, cause a device to perform operations comprising:
obtaining information related to a plurality of orthogonal cover code indexes;
determining an orthogonal cover code index among the plurality of orthogonal cover code indexes; and
performing a transmission to a base station based on an orthogonal cover code related to the orthogonal cover code index,
wherein the orthogonal cover code index is determined based on whether the transmission is a transmission for initial access.

17. A method, comprising:
obtaining information related to a plurality of orthogonal cover code indexes;
determining an orthogonal cover code index among the plurality of orthogonal cover code indexes; and
receiving a transmission of a device based on an orthogonal cover code related to the orthogonal cover code index,
wherein the orthogonal cover code index is determined based on whether the transmission is a transmission for initial access.

18. A base station, comprising:
at least one transceiver;
at least one processor; and
at least one memory connected to the at least one processor and storing instructions that, based on being executed by the at least one processor, cause the base station to perform operations comprising:
obtaining information related to a plurality of orthogonal cover code indexes;
determining an orthogonal cover code index among the plurality of orthogonal cover code indexes; and
receiving a transmission of a device based on an orthogonal cover code related to the orthogonal cover code index,
wherein the orthogonal cover code index is determined based on whether the transmission is a transmission for initial access.

19. A processing device adapted to control a base station, the processing device comprising:
at least one processor; and
at least one memory connected to the at least one processor and storing instructions that, based on being executed by the at least one processor, cause the base station to perform operations comprising:
obtaining information related to a plurality of orthogonal cover code indexes;
determining an orthogonal cover code index among the plurality of orthogonal cover code indexes; and
receiving a transmission of a device based on an orthogonal cover code related to the orthogonal cover code index,
wherein the orthogonal cover code index is determined based on whether the transmission is a transmission for initial access.

20. A non-transitory computer-readable storage medium storing instructions that, when executed, cause a base station to perform operations comprising:
obtaining information related to a plurality of orthogonal cover code indexes;
determining an orthogonal cover code index among the plurality of orthogonal cover code indexes; and
receiving a transmission of a device based on an orthogonal cover code related to the orthogonal cover code index,
wherein the orthogonal cover code index is determined based on whether the transmission is a transmission for initial access.
